(19) Europäisches Patentamt
European Patent Office
Office européen des brevets

(11) **EP 3 244 785 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(21) Anmeldenummer: **15706470.0**

(22) Anmeldetag: **24.02.2015**

(51) Int Cl.:
*A47L 9/00* *(2006.01)*  *A47L 9/20* *(2006.01)*
*A47L 9/28* *(2006.01)*  *B01D 46/00* *(2006.01)*
*F16K 17/04* *(2006.01)*

(86) Internationale Anmeldenummer:
**PCT/EP2015/053840**

(87) Internationale Veröffentlichungsnummer:
**WO 2016/112996 (21.07.2016 Gazette 2016/29)**

(54) **SAUGGERÄT UND VERFAHREN ZUM BETREIBEN EINES SAUGGERÄTS**

SUCTION DEVICE AND METHOD FOR OPERATING A SUCTION DEVICE

APPAREIL D'ASPIRATION ET PROCÉDÉ PERMETTANT DE FAIRE FONCTIONNER UN APPAREIL D'ASPIRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2015 PCT/EP2015/050500**
**13.01.2015 DE 102015100426**

(43) Veröffentlichungstag der Anmeldung:
**22.11.2017 Patentblatt 2017/47**

(73) Patentinhaber: **Alfred Kärcher SE & Co. KG**
**71364 Winnenden (DE)**

(72) Erfinder:
• **PEFLOF, Gabór**
**71364 Winnenden (DE)**

• **SEIBOLD, Andreas**
**71394 Kernen (DE)**
• **EBERT, Florian**
**71394 Kernen (DE)**
• **FRANK, Jürgen**
**71737 Kirchberg (DE)**

(74) Vertreter: **Hoeger, Stellrecht & Partner Patentanwälte mbB**
**Uhlandstrasse 14c**
**70182 Stuttgart (DE)**

(56) Entgegenhaltungen:
**WO-A1-2012/107103     DE-A1-102010 029 524**

**Beschreibung**

Die Erfindung betrifft ein Sauggerät, umfassend ein Saugaggregat, einen Schmutzsammelbehälter, eine Filtereinrichtung, wobei der Schmutzsammelbehälter über die Filtereinrichtung mit dem Saugaggregat in Strömungsverbindung steht, und eine Abreinigungseinrichtung für die Filtereinrichtung, welche eine Fremdluftventileinrichtung aufweist.

Die Erfindung betrifft ferner ein Verfahren zum Betreiben eines Sauggeräts, wobei das Sauggerät ein Saugaggregat, einen Schmutzsammelbehälter, eine Filtereinrichtung, wobei der Schmutzsammelbehälter über die Filtereinrichtung mit dem Saugaggregat in Strömungsverbindung steht, und eine Abreinigungseinrichtung für die Filtereinrichtung, welche eine Fremdluftventileinrichtung aufweist, umfasst.

In der WO 2012/107103 A1 ist ein Verfahren zur Abreinigung eines Filters eines Staubsaugers beschrieben, bei dem Saugleistung eines Saugaggregats für einen Übergang eines Fremdluftventils in eine geöffnete Ventilstellung erhöht und später wieder reduziert wird.

Der Erfindung liegt die Aufgabe zugrunde, ein Sauggerät der eingangs genannten Art bereitzustellen, beim welchem eine effektive Filterabreinigung erzielt wird.

Diese Aufgabe wird bei dem eingangs genannten Sauggerät erfindungsgemäß dadurch gelöst, dass mindestens ein Führungskanal für Luft vorgesehen ist, welcher einen ersten Anschluss aufweist, der in fluidwirksamer Verbindung mit der Abreinigungseinrichtung zur Bereitstellung von Fremdluft aus dem mindestens einen Führungskanal steht, einen zweiten Anschluss zur Einkopplung von Abluft des Saugaggregats in den mindestens einen Führungskanal aufweist, und einen dritten Anschluss aufweist, welcher in fluidwirksamer Verbindung mit der Umgebung des Sauggeräts steht, wobei über den dritten Anschluss Luft aus der Umgebung in den mindestens einen Führungskanal einströmbar ist.

Bei dem erfindungsgemäßen Sauggerät wird gezielt Abluft als Fremdluft für einen Abreinigungsvorgang der Filtereinrichtung verwendet. In dem mindestens einen Führungskanal ist die Abluft gezielt geführt und an dem ersten Anschluss bereitgestellt.

Durch den mindestens einen Führungskanal ist eine Art von Bypass für eine Abluftführung bereitgestellt.

Die Abluft wird bereits mit Überdruck von dem Saugaggregat bereitgestellt. Es liegt in der Regel ein entsprechender Volumenstrom vor, wobei ein entsprechender Überdruck herrscht. Es lässt sich dadurch eine effektive Abreinigung erreichen.

Abluft ist bereits gefilterte Luft. Sie ist in der Regel weniger verschmutzt als Umgebungsluft. Dadurch ist rückgespülte Luft wiederum sauberer. Es lässt sich eine Erhöhung der Lebensdauer des Saugaggregats erreichen.

Durch die zusätzliche Einkopplung von Luft aus der Umgebung über den dritten Anschluss in den mindestens einen Führungskanal lässt sich der Strömungswiderstand verringern und es wird eine effektive Abreinigung erzielt.

Durch eine gezielte Strömungsführung in dem mindestens einen Führungskanal lässt sich auch eine effektive Geräuschminderung erreichen.

Es ist insbesondere vorgesehen, dass der dritte Anschluss so ausgebildet ist, dass an ihm Abluft des Saugaggregats in die Umgebung austretbar ist. Es kann dann Abluft von dem ersten Anschluss bis zum dritten Anschluss geführt werden und dort an die Umgebung abgegeben werden, wobei die Abluft an dem ersten Anschluss vorbeiströmt und beim Filterabreinigungsvorgang dann als Fremdluft zur Verfügung steht.

Insbesondere erstreckt sich der mindestens eine Führungskanal zwischen dem zweiten Anschluss und dem dritten Anschluss. Dadurch lässt sich eine Führung von Luft zwischen dem zweiten Anschluss und dem dritten Anschluss erreichen. Zusätzlich wird auch eine Führung von Luft zumindest von dem dritten Anschluss zu dem ersten Anschluss erreicht.

Günstig ist es, wenn der erste Anschluss bezogen auf eine Strömungsführung und/oder geometrisch zwischen dem zweiten Anschluss und dem dritten Anschluss und insbesondere mindestens näherungsweise mittig zwischen dem zweiten Anschluss und dem dritten Anschluss positioniert ist. Eine geometrische Zwischenpositionierung bedeutet dabei, dass eine Verbindungslinie zwischen dem zweiten Anschluss und dem dritten Anschluss durch den ersten Anschluss geht bzw. durch eine Mittelebene des ersten Anschlusses geht. Es lässt sich dadurch eine symmetrisierte Strömungsführung an einem Gehäuse des Sauggeräts erreichen. Es lässt sich eine effektive Filterabreinigung realisieren.

Bei einem Ausführungsbeispiel weist der mindestens eine Führungskanal einen ersten Bereich mit einer ersten Erstreckungsachse auf, an welchem der zweite Anschluss liegt, weist einen zweiten Bereich mit einer zweiten Erstreckungsachse auf, an welchem der erste Anschluss liegt, und weist einen dritten Bereich mit einer dritten Erstreckungsachse auf, an welchem der dritte Anschluss liegt, wobei die erste Erstreckungsachse und/oder die dritte Erstreckungsachse quer und insbesondere senkrecht zu der zweiten Erstreckungsachse orientiert sind und insbesondere der erste Anschluss und der zweite Anschluss auf unterschiedlichen Höhen liegen und/oder der erste Anschluss und der dritte Anschluss auf unterschiedlichen Höhen liegen. Es ergibt sich dadurch ein kompakter Aufbau mit optimierter Strömungsführung.

Aus dem gleichen Grund ist es günstig, wenn der erste Bereich und/oder der dritte Bereich seitlich neben der Abreinigungseinrichtung oder Filtereinrichtung angeordnet sind.

Günstig ist es, wenn der mindestens eine Führungskanal mindestens teilweise an einem Gehäusebereich angeordnet oder gebildet ist, welcher den Schmutzsammelbehälter und/oder die Filtereinrichtung und/oder die Abreinigungseinrichtung abdeckt.

Bei einem Ausführungsbeispiel sind der mindestens eine Führungskanal und der zweite Anschluss so ausgebildet, dass die Abluft des Saugaggregats vollständig in den mindestens einen Führungskanal eintritt. Dadurch wird Abluft vollständig an dem ersten Anschluss vorbeigeführt. Es ergibt sich eine effektive Abreinigungsfunktion. Ferner lässt sich eine gute Geräuschminderung bei entsprechender Führung der Strömung erreichen. Die über den zweiten Anschluss eingekoppelte Abluft tritt dann, sofern kein Filterabreinigungsprozess durchgeführt wird, vollständig an dem dritten Anschluss in die Umgebung aus.

Es ist dann günstig, wenn der mindestens eine Führungskanal und der dritte Anschluss so ausgebildet sind, dass Abluft des Saugaggregats außerhalb eines Abreinigungsvorgangs der Filtereinrichtung nur an dem dritten Anschluss an die Umgebung austretbar ist.

Es ist insbesondere ein erster Zuströmbereich für Luft zu dem ersten Anschluss vorgesehen, welcher zwischen dem zweiten Anschluss und dem ersten Anschluss gebildet ist, und es ist ein zweiter Zuströmbereich vorgesehen, welcher zwischen dem dritten Anschluss und dem ersten Anschluss gebildet ist. Über den ersten Zuströmbereich kann Abluft des Saugaggregats als Fremdluft bereitgestellt werden. Über den zweiten Zuströmbereich kann Luft aus der Umgebung als Fremdluft bereitgestellt werden. Wenn beispielsweise keine oder nicht ausreichend Abluft zur Verfügung steht (weil beispielsweise ein Saugschlauch verstopft ist), dann kann Luft aus der Umgebung zumindest temporär als Fremdluft dienen. Wenn sowohl Abluft als auch Luft aus der Umgebung bereitsteht, dann lässt sich entsprechend der Strömungswiderstand senken. Dies kann beispielsweise zu einer Geräuschminimierung beitragen.

Bei einem weiteren Ausführungsbeispiel ist an dem mindestens einen Führungskanal ein vierter Anschluss für Abluft des Saugaggregats angeordnet. Dadurch ist es beispielsweise möglich, eine symmetrische Führung für Abluft bezüglich des ersten Anschlusses zu erreichen. Insbesondere kann an unterschiedlichen Stellen des mindestens einen Führungskanals Abluft in diesen eingekoppelt werden.

Aus dem gleichen Grund ist es dann günstig, wenn an dem mindestens einen Führungskanal ein fünfter Anschluss an die Umgebung angeordnet ist. Es kann dann an einer anderen Stelle als an dem dritten Anschluss Luft aus der Umgebung in den mindestens einen Führungskanal eintreten. Bei entsprechender Anordnung des zweiten Anschlusses, dritten Anschlusses, vierten Anschlusses und fünften Anschlusses lässt sich eine symmetrische Führung bezüglich Abluft und Luft aus der Umgebung erreichen.

Es ist günstig, wenn die Filtereinrichtung und/oder die Abreinigungseinrichtung geometrisch zwischen dem dritten Anschluss und dem fünften Anschluss positioniert sind. Eine Verbindungslinie zwischen dem dritten Anschluss und dem fünften Anschluss geht dann durch die Filtereinrichtung bzw. die Abreinigungseinrichtung. Dadurch lässt sich ein symmetrisierter Aufbau mit symmetrisierter Luftführung bezüglich der Abreinigungseinrichtung erreichen.

Aus dem gleichen Grund ist es günstig, wenn der dritte Anschluss und der fünfte Anschluss an gegenüberliegenden Gehäuseseiten positioniert sind. Es lässt sich mit konstruktiv einfachen Mitteln eine optimierte und insbesondere symmetrisierte Strömungsführung erreichen.

Es ist ebenfalls günstig, wenn die Filtereinrichtung und/oder die Abreinigungseinrichtung geometrisch zwischen dem zweiten Anschluss und dem vierten Anschluss positioniert sind. Es lässt sich dadurch eine symmetrisierte Strömungsführung mit einfachen konstruktiven Mitteln erreichen.

Weiterhin ist es günstig, wenn der mindestens eine Führungskanal spiegelsymmetrisch bezüglich des dritten Anschlusses und fünften Anschlusses und/oder des ersten Anschlusses und des vierten Anschlusses ausgebildet ist, wobei insbesondere der erste Anschluss auf einer Spiegelebene liegt. Es ergibt sich dadurch eine symmetrisierte Strömungsführung.

Insbesondere ist eine spiegelsymmetrische Strömungsführung für die Luftführung zu dem ersten Anschluss erreicht. Es ergibt sich dadurch eine optimierte Filterabreinigung.

Es ist ferner günstig, wenn der fünfte Anschluss an einem gleichen Gehäuseseitenbereich wie der zweite Anschluss liegt und der vierte Anschluss an einem gleichen Gehäuseseitenbereich wie der dritte Anschluss liegt. Dadurch lässt sich eine symmetrisierte Strömungsführung erreichen.

Es ist insbesondere ein erster Zuströmbereich für Luft zu dem ersten Anschluss gebildet, welcher zwischen dem zweiten Anschluss und dem ersten Anschluss gebildet ist, es ist ein zweiter Zuströmbereich gebildet, welcher zwischen dem dritten Anschluss und dem ersten Anschluss gebildet ist, es ist ein dritter Zuströmbereich vorgesehen, welcher zwischen dem vierten Anschluss und dem ersten Anschluss gebildet ist, und es ist ein vierter Zuströmbereich vorgesehen, welcher zwischen dem fünften Anschluss und dem ersten Anschluss gebildet ist, wobei insbesondere der erste Zuströmbereich und der dritte Zuströmbereich spiegelsymmetrisch zueinander sind und insbesondere der zweite Zuströmbereich und der vierte Zuströmbereich spiegelsymmetrisch zueinander sind. Es lässt sich dadurch eine symmetrisierte Strömungsführung erreichen. Dem ersten Anschluss wird genügend Fremdluft bereitgestellt.

Bei einem Ausführungsbeispiel ist es vorgesehen, dass der Abreinigungseinrichtung mindestens ein Lochplattenresonator schallwirksam zugeordnet ist, wobei der mindestens eine Lochplattenresonator eine Kammer mit einem Kammerraum und eine Kammerwandung und mindestens eine Lochplatte, welche den Kammerraum abdeckt, aufweist.

Ein Lochplattenresonator (Lochplattenabsorber) weist über den Kammerraum einen Resonatorraum auf, welcher durch eine Lochplatte insbesondere einseitig begrenzt ist. Über einen Lochplattenresonator lassen sich effektiv durch Schallabsorption Geräusche vor allem im tiefen Frequenzbereich (insbesondere kleiner oder gleicher 2000 Hz) verringern. Die Schallabsorption in einem Lochplattenresonator erfolgt durch Reibung einer oszillierenden Luftsäule an einer Öffnungswandung der Lochplatte des Lochplattenresonators. Eine Abreinigungseinrichtung kann eine Geräuschquelle für tieffrequente Geräusche bilden. Durch die Zuordnung eines Lochplattenresonators können solche Geräusche effektiv gedämpft werden. Insbesondere lassen sich Knallgeräusche, welche durch den Betrieb der Abreinigungseinrichtung entstehen, dämpfen. Die mindestens eine Lochplatte ist eine Platte, welche mit einer Mehrzahl von Öffnungen versehen ist. Diese ist schallwirksam mit der entsprechenden Geräuschquelle des Sauggeräts verbunden, d. h. Schallwellen der Geräuschquelle breiten sich in Richtung der Lochplatte aus. An dem Lochplattenresonator kann dann eine Schallabsorption mit effektiver Lärmminderung erzielt werden.

Ein Lochplattenresonator ist insbesondere bestimmt durch seine Resonanzfrequenz (Mittenfrequenz), die geometrischen Abmessungen des Kammerraums, die geometrischen Abmessungen der Öffnungen in der Lochplatte, und der Anordnung der Öffnungen an der Lochplatte insbesondere über das Verhältnis der Fläche einer Öffnung einer Lochplatte zu der Gesamtfläche der Lochplatte. Durch entsprechende Dimensionierung lässt sich für eine oder mehrere spezifische Geräuschquellen eine effektive Lärmminderung erzielen.

Der angegebene Frequenzbereich für die Geräuschemission bedeutet nicht, dass nur in diesem Frequenzbereich Geräusche emittiert werden. Es können auch höherfrequente Geräusche vorliegen. Der mindestens eine Lochplattenresonator dient vor allem zur Dämpfung der niederfrequenten Geräusche unterhalb von beispielsweise 2000 Hz. Bei einer Abluftreinigungseinrichtung sind in der Regel die höherfrequenten Geräusche im Vergleich zu den niederfrequenten Geräuschen vernachlässigbar.

Bei einem Ausführungsbeispiel weist die Kammerwandung eine Deckelwand auf, welche der mindestens einen Lochplatte gegenüberliegt, und weist eine (Lateral-)Wandung auf, welche zwischen der Deckelwandung und der mindestens einen Lochplatte liegt. Die (Lateral-)Wandung bildet Seitenwände aus, welche seitlich den Kammerraum umgibt.

Bei einem fertigungstechnisch vorteilhaften Ausführungsbeispiel sind die mindestens eine Lochplatte und die Deckelwand parallel ausgerichtet. Ein entsprechender Lochplattenresonator lässt sich bezüglich seinen Schallabsorptionseigenschaften auch auf einfache Weise berechnen.

Aus dem gleichen Grund ist es günstig, wenn der Kammerraum eine (Hohl-)Quaderform hat.

Bei einem Ausführungsbeispiel ist die mindestens eine Lochplatte (als Ganzes) nicht-eben ausgebildet und weist insbesondere einen ersten Bereich, zweiten Bereich und dritten Bereich auf, wobei der erste Bereich und der zweite Bereich und der dritte Bereich gegenüberliegenden an dem zweiten Bereich angeordnet sind und winklig zu dem zweiten Bereich liegen. Die entsprechenden Bereiche selber weisen insbesondere ebene Oberflächen auf (wobei an den Bereichen durchgehende Öffnungen gebildet sind). Durch eine entsprechende geometrische Ausbildung der Lochplatte lässt sich eine gezielte Strömungsführung für Luft erreichen.

Bei einem fertigungstechnisch günstigen Ausführungsbeispiel umfasst die Kammerwandung eine erste Querwand, eine zweite Querwand, eine erste Längswand, eine zweite Längswand und eine Deckelwand, wobei die erste Querwand und die zweite Querwand beabstandet sind und einander zuweisen, die erste Längswand und die zweite Längswand zueinander beabstandet sind und einander zuweisen, die erste Querwand und die erste Längswand quer zueinander orientiert sind, und die Deckelwand quer zu der ersten Querwand, der zweiten Querwand, der ersten Längswand und der zweiten Längswand orientiert ist. Der entsprechende Lochplattenresonator weist eine Boxform auf. Ein solcher Lochplattenresonator lässt sich auf einfache Weise an einem Reinigungsgerät unterbringen.

Aus dem gleichen Grund ist es günstig, wenn die erste Querwand und die zweite Querwand parallel orientiert sind und/oder die erste Längswand und die zweite Längswand parallel orientiert sind. Es lässt sich dadurch ein Lochplattenresonator realisieren, welcher einen quaderförmigen Kammerraum hat. Die Absorptionseigenschaften eines Lochplattenresonators lassen sich bei einer solchen Ausbildung auf einfache Weise berechnen. Dadurch wiederum ist auf einfache Weise eine Anpassung an gegebene Verhältnisse in einem Reinigungsgerät und insbesondere eine Frequenzanpassung auf einfache Weise ermöglicht.

Günstig ist es, wenn die Kammerwandung mindestens teilweise aus einem schallharten Material hergestellt ist. Unter einem schallharten Material wird hier ein Material mit einem Reflexionsgrad von mindestens 94 % verstanden. Ein schallhartes Material weist eine geringe Schallabsorption auf. Es wird dann für eine effektive Lärmminderung gesorgt.

Es kann vorgesehen sein, dass in dem Kammerraum mindestens teilweise ein Schallabsorptionsmaterial wie beispielsweise Mineralfaserwolle angeordnet ist. Dadurch ergibt sich eine effektivere Schallabsorption.

Günstig ist es, wenn der mindestens eine Lochplattenresonator und insbesondere die mindestens eine Lochplatte eine Wandung (einschließlich Teilwandung) des mindestens einen Führungskanals bildet. Dadurch ergibt sich ein kompakter Aufbau.

Günstig ist es, wenn der mindestens eine Lochplattenresonator an einem Gehäusedeckel angeordnet und insbesondere an diesem fixiert ist. Wenn beispielsweise der Gehäusedeckel geöffnet wird, dann wird der Lochplattenresonator entsprechend mitbewegt. Dadurch ergibt sich ein vereinfachter Zugang auf die Abreinigungseinrichtung bzw. die Filtereinreichung.

Erfindungsgemäß wird ein Verfahren zum Betreiben eines Sauggeräts der eingangs genannten Art bereitgestellt, bei dem Abluft des Saugaggregats definiert über mindestens einen Führungskanal der Abreinigungseinrichtung zugeleitet wird, wobei die Abluft aus dem mindestens einen Führungskanal über mindestens einen Anschluss an die Umgebung abgegeben wird, und wobei der mindestens eine Anschluss auch als Eintrittsanschluss für Luft aus der Umgebung ausgebildet ist, so dass Luft aus der Umgebung in dem mindestens einen Führungskanal der Abreinigungseinrichtung zuführbar ist.

Das erfindungsgemäße Verfahren weist die bereits im Zusammenhang mit dem erfindungsgemäßen Sauggerät erläuterten Vorteile auf.

Bei einem Ausführungsbeispiel wird Abluft des Saugaggregats komplett in den mindestens einen Führungskanal eingekoppelt. Nicht für einen Abreinigungsvorgang genutzte Abluft kann nur über den mindestens einen Anschluss an die Umgebung austreten.

Die nachfolgende Beschreibung bevorzugter Ausführungsformen dient im Zusammenhang mit den Zeichnungen der näheren Erläuterung der Erfindung. Es zeigen:

Figur 1      eine schematische Schnittansicht eines Ausführungsbeispiels eines Sauggeräts;

Figur 2      eine vergrößerte Darstellung einer Fremdluftventileinrichtung des Sauggeräts gemäß Figur 1;

Figur 3      eine perspektivische Teildarstellung eines ersten Ausführungsbeispiels einer Modifikation des Sauggeräts gemäß Figur 1;

Figur 4      eine Schnittansicht längs der durch die Linie 4-4 angedeuteten Ebene gemäß Figur 3, wobei ein Gehäusedeckel aufgesetzt ist;

Figur 5      eine ähnliche Ansicht wie Figur 4 mit der durch die Linie 5-5 gemäß Figur 3 angedeuteten Schnittebene;

Figur 6      eine teilperspektivische Darstellung eines zweiten Ausführungsbeispiels einer Modifikation des Sauggeräts gemäß Figur 1;

Figur 7      eine Schnittansicht längs der Ebene, welche durch die Linie 7-7 in Figur 6 angedeutet ist (mit aufgesetztem Deckel);

Figur 8      eine ähnliche Ansicht wie Figur 7 mit der Schnittebene angedeutet durch die Linie 8-8 gemäß Figur 6; und

Figur 9      eine Schnittansicht eines Lochplattenresonators zur Erläuterung seiner Funktionsweise.

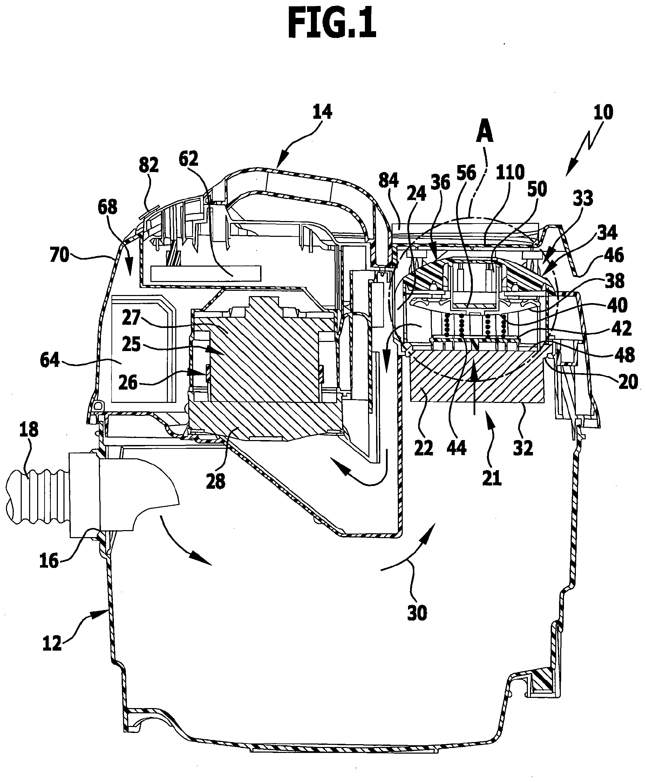

Ein Ausführungsbeispiel eines (Staub-)Saugers 10 als Beispiel für ein Reinigungsgerät, welches in Figur 1 in einer Schnittansicht schematisch dargestellt ist, weist einen Schmutzsammelbehälter 12 auf, auf den ein Saugkopf 14 aufgesetzt ist. Der Staubsauger 10 ist ein Beispiel für eine Staubsaugvorrichtung und als Stand-alone-Gerät (als autonomes Gerät) ausgebildet.

Der Schmutzsammelbehälter 12 weist einen Saugeinlass 16 auf, an den in üblicher Weise ein Saugschlauch 18 angeschlossen werden kann. Der Saugkopf 14 dichtet den Schmutzsammelbehälter 12 oberseitig ab und bildet einen Saugauslass 20 aus, an dem eine Filtereinrichtung 21 mit (mindestens) einem Filter 22 gehalten ist. An das Filter 22 schließt sich eine Absaugleitung 24 an, über die der Schmutzsammelbehälter 12 mit einem Saugaggregat 26 in Strömungsverbindung steht. Das Saugaggregat 26 umfasst eine Elektromotoreinrichtung 25 mit (mindestens) einem Elektromotor 27 und ein vom Elektromotor 27 drehend angetriebenes Gebläse 28.

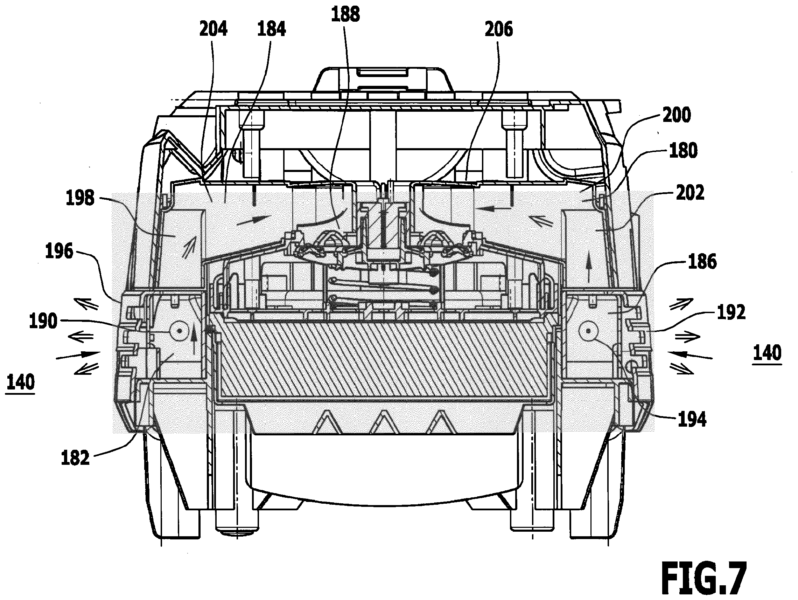

Der Schmutzsammelbehälter 12 wird im Betrieb des Staubsaugers 10 vom Saugaggregat 26 mit Unterdruck beaufschlagt, sodass sich eine in Figur 1 durch die Pfeile 30 dargestellte Saugströmung ausbildet. Unter der Wirkung der Saugströmung 30 kann mit Schmutz beladene Saugluft über den Saugeinlass 16 in den Schmutzsammelbehälter 12 eingesaugt werden, die dann vom Saugaggregat 26 abgesaugt werden kann. Die Saugluft kann vom Saugaggregat 26 über Abluftöffnungen 29 (Figur 7) des Saugkopfes 14 an die Umgebung abgegeben werden.

Die Saugluft durchströmt das Filter 22, sodass sich mitgeführte Feststoffpartikel auf der dem Schmutzsammelbehälter 12 zugewandten Schmutzseite 32 des Filters 22 ablagern. Es ist deshalb erforderlich, das Filter 22 von Zeit zu Zeit abzureinigen, da es ansonsten einen zunehmenden Strömungswiderstand ausbildet, wodurch die Saugwirkung des Staubsaugers 10 beeinträchtigt wird.

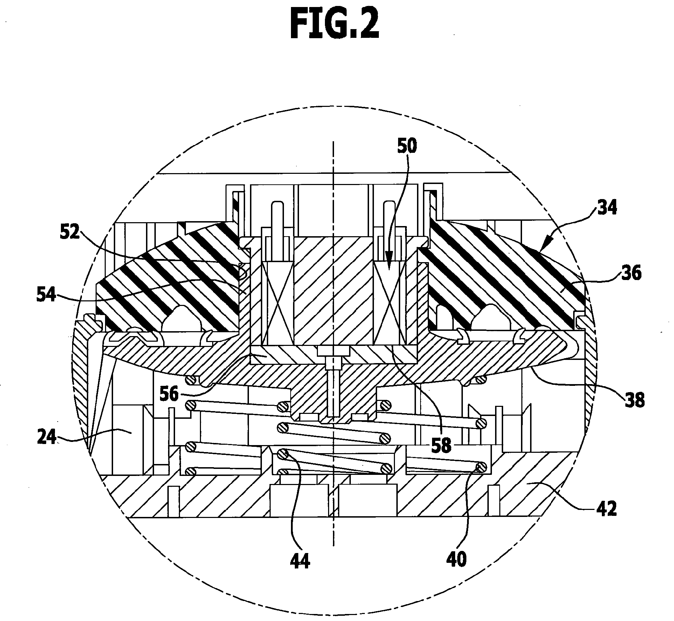

Zur Abreinigung des Filters 22 ist oberhalb des Filters 22 im Saugkopf 14 eine Abreinigungseinrichtung, welche als Fremdluftventileinrichtung 33 ausgebildet ist, mit (mindestens) einem Fremdluftventil 34 angeordnet (in Figur 2 vergrößert dargestellt). Es umfasst eine ortsfest im Saugkopf 14 angeordnete Ventilhalterung 36, die einen Ventilsitz ausbildet für einen beweglichen Ventilkörper in Form eines Ventiltellers 38. Der Ventilteller 38 ist mittels einer Schließfeder 40 mit einer Schließkraft in Richtung auf die Ventilhalterung 36 beaufschlagt. Die Schließfeder 40 ist zwischen einer plattenartigen, eine Vielzahl von Strömungsdurchlässen aufweisenden, ortsfest im Saugkopf 14 angeordneten Filterhalterung 42 und dem Ventilteller 38 eingespannt. Zusätzlich zur Schließfeder 40 trägt die Filterhalterung 42 ein federndes Anschlagelement in Form einer Anschlagfeder 44. Diese weist insbesondere (vorzugsweise ebenso wie die Schließfeder 40) eine lineare Kennlinie auf. Sie ist beispielsweise als Schraubenfeder ausgebildet. Im Gegensatz zur Schließfeder 40 steht die Anschlagfeder 44 in der Schließstellung des Ventiltellers 38 nicht unter Vorspannung. Erst wenn sich der Ventilteller 38 vom Ventilsitz der Ventilhalterung 36 abhebt, gelangt die Anschlagfeder 44 an der Unterseite des Ventiltellers 38 zur Anlage und wird bei einer weiteren Bewegung des Ventiltellers 38 etwas zusammengedrückt. Sie übt dadurch eine zunehmende Rückstellkraft auf den Ventilteller 38 aus und beschleunigt die Bewegung des Ventiltellers 38 ausgehend von seiner (in Figur 2 dargestellten) geschlossenen Ventilstellung über eine geöffnete Ventilstellung wieder zurück in die geschlossene Ventilstellung. In der geöffneten Ventilstellung nimmt der Ventilteller 38 einen Abstand zu der Ventilhalterung 36 ein, die den Ventilsitz ausbildet.

Die Ventilhalterung 36 weist eine Vielzahl von in der Zeichnung nicht dargestellten Durchgangsöffnungen auf, deren Mündungsbereiche vom Ventilteller 38 verschlossen werden, wenn dieser seine geschlossene Ventilstellung einnimmt. In Höhe der Ventilhalterung 36 weist der Saugkopf 14 eine seitliche Öffnung 46 auf. Über die seitliche Öffnung 46 kann Fremdluft in die Durchgangsöffnungen der Ventilhalterung 36 einströmen. Nimmt der Ventilteller 36 seine zur Ventilhalterung 36 beabstandete offene Ventilstellung ein, so steht die seitliche Öffnung 46 über die Durchgangsöffnungen der Ventilhalterung 36 mit der Absaugleitung 24 in Strömungsverbindung und Fremdluft kann die dem Schmutzsammelbehälter 12 abgewandte Reinseite 48 des Filters 22 beaufschlagen. Nimmt der Ventilteller 38 seine geschlossene Ventilstellung ein, so ist die Strömungsverbindung zwischen der seitlichen Öffnung 46 und der Absaugleitung 24 unterbrochen.

In einem zentralen Bereich trägt die Ventilhalterung 36 einen Elektromagneten 50. In Umfangsrichtung ist der Elektromagnet 50 von einem Ringraum 52 umgeben, in den eine oberseitig an den Ventilteller 38 angeformte Führungshülse 54 eintaucht. Die Führungshülse 54 nimmt ein magnetisierbares Element beispielsweise in Form einer Eisenplatte 56 auf, die in der geschlossenen Ventilstellung des Ventiltellers 38 an einer freien Stirnkante 58 des Elektromagneten 50 anliegt und in Kombination mit dem Elektromagneten 50 einen geschlossenen Magnetkreis ausbildet.

Der Elektromagnet 50 steht über eine Stromversorgungsleitung mit einer im Saugkopf 14 angeordneten (elektronischen) Steuerungseinrichtung 62 in elektrischer Verbindung. Von der Steuerungseinrichtung 62 wird der Elektromagnet 50 während des normalen Saugbetriebs des Staubsaugers 10 mit einem Versorgungsstrom beaufschlagt. Aufgrund des sich ausbildenden Magnetfelds wird der Ventilteller 38 zuverlässig in seiner Schließstellung gehalten. Die Haltekraft des Elektromagneten 50 wird von der Federkraft der Schließfeder 40 unterstützt.

Wird die Stromversorgung des Elektromagneten 50 von der Steuerungseinrichtung 62 unterbrochen, so entfällt die auf den Ventilteller 38 einwirkende magnetische Haltekraft und der Ventilteller 38 wird aufgrund der auf ihn einwirkenden Druckdifferenz, die sich aus dem Außendruck der im Bereich der Ventilhalterung 36 vorliegenden Fremdluft und dem Innendruck innerhalb der Absaugleitung 24 ergibt, entgegen der Wirkung der Schließfeder 40 vom Ventilsitz abgehoben. Fremdluft kann dann schlagartig durch die Durchgangsöffnungen der Ventilhalterung 36 hindurch in die Absaugleitung 24 einströmen und das Filter 22 wird auf seiner Reinseite 48 schlagartig mit Fremdluft beaufschlagt. Dies führt zu einer mechanischen Erschütterung des Filters 22. Außerdem wird das Filter 22 in Gegenstromrichtung, das heißt entgegen der während des normalen Saugbetriebs herrschenden Strömungsrichtung 30, von Fremdluft durchströmt. Dies hat eine wirkungsvolle Abreinigung des Filters 22 zur Folge.

Die Energieversorgung des Staubsaugers 10 erfolgt bei einem Ausführungsbeispiel mit Hilfe einer wiederaufladbaren Batterieeinrichtung. Diese umfasst beispielsweise zwei wiederaufladbare Batterien. Die Batterieeinrichtung umfasst beispielsweise einen oder mehrere Lithium-Ionen-Akkumulatoren. Diese sind seitlich neben dem Saugaggregat 26 in einem Batteriefach 68 des Saugkopfes 14 angeordnet. Das Batteriefach 68 ist über eine nach außen schwenkbare Klappe 70 dem Benutzer zum Auswechseln der Batterien zugänglich.

Die elektronische Steuerungseinrichtung 62 ist oberhalb des Saugaggregates 26 im Saugkopf 14 angeordnet und steht über Versorgungsleitungen mit den Batterien 64 in elektrischer Verbindung. Eingangsseitig ist an die Steuereinrichtung 62 ein vom Benutzer manuell betätigbarer Taster 82 angeschlossen, der an der Oberseite des Saugkopfes 14 angeordnet ist. Durch Betätigen des Tasters 82 kann der Benutzer (manuell) eine Filterabreinigung auslösen.

Die Fremdluftventileinrichtung 33 in dem Sauger 10 ist eine Geräuschquelle für Knallgeräusche. Die plötzliche ("schlagartige") Druckänderung, welche zu einer umgekehrten Durchströmung des Filters 22 führt, führt zu tieffrequenten Knallgeräuschen. Der relevante Frequenzbereich liegt üblicherweise deutlich unter 1000 Hz. Der Druckabfall ist schlagartig und weist eine Zeitdauer von beispielsweise kleiner 0,05 s auf. Die Druckänderung liegt insbesondere bei 50 mbar (5 kPa) oder mehr.

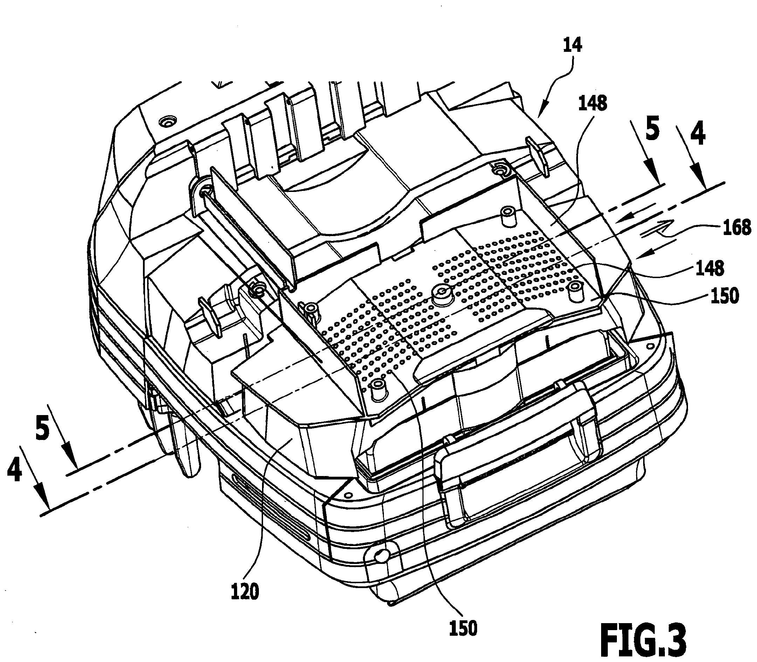

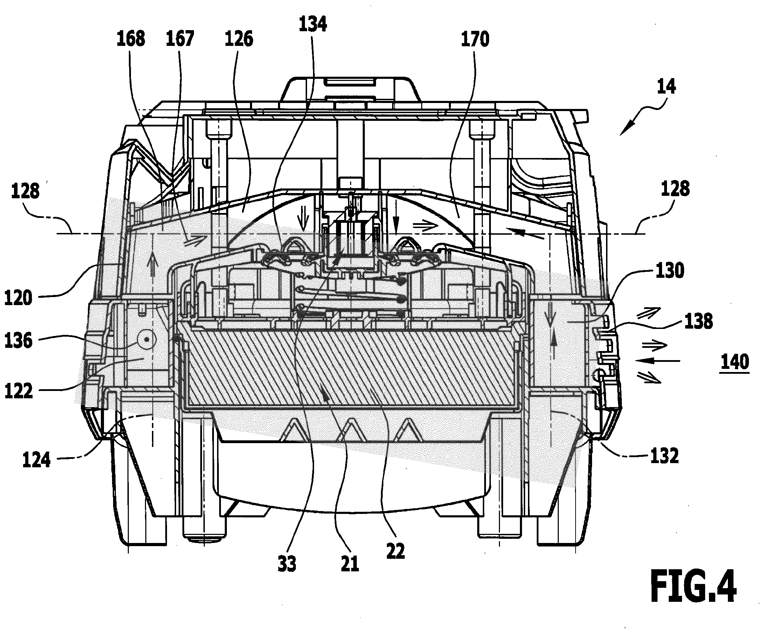

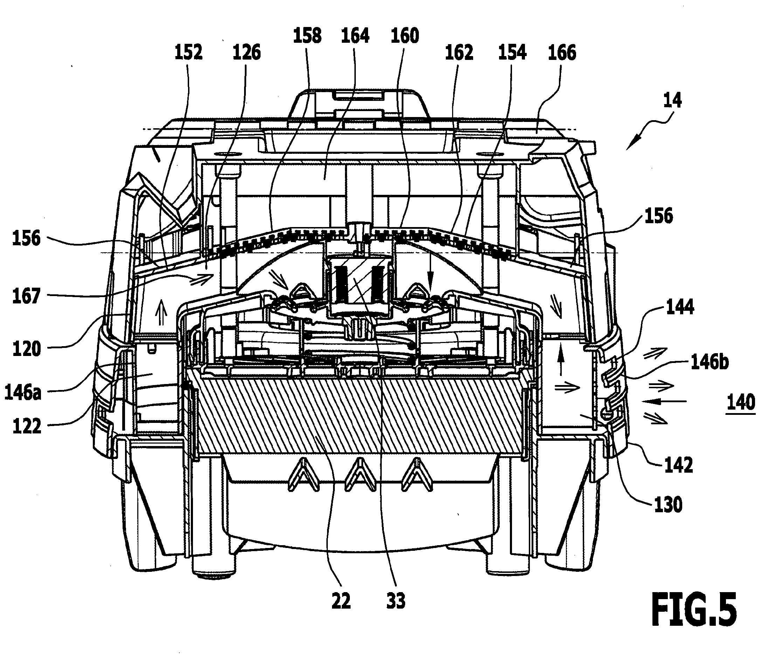

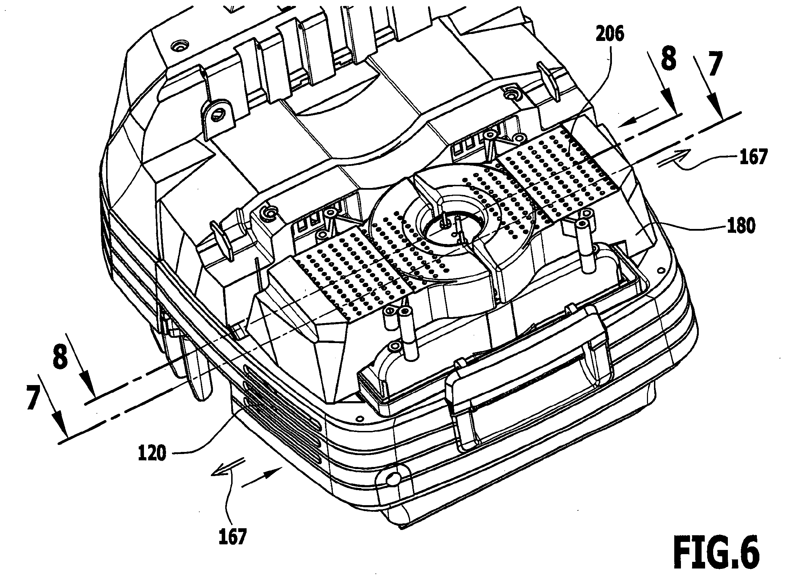

Zur Lärmminderung bezüglich dieser Geräuschquelle ist der Sauger 10 mit einem Lochplattenresonator 84 (Figuren 3 bis 9; in Figur 3 ist der Lochplattenresonator mit dem Bezugszeichen 148 versehen und in Figur 6 mit dem Bezugszeichen 206) versehen. Der Lochplattenresonator 84 ist der Fremdluftventileinrichtung 33, welche die Geräuschquelle bildet, zugeordnet und mit dieser schallwirksam verbunden.

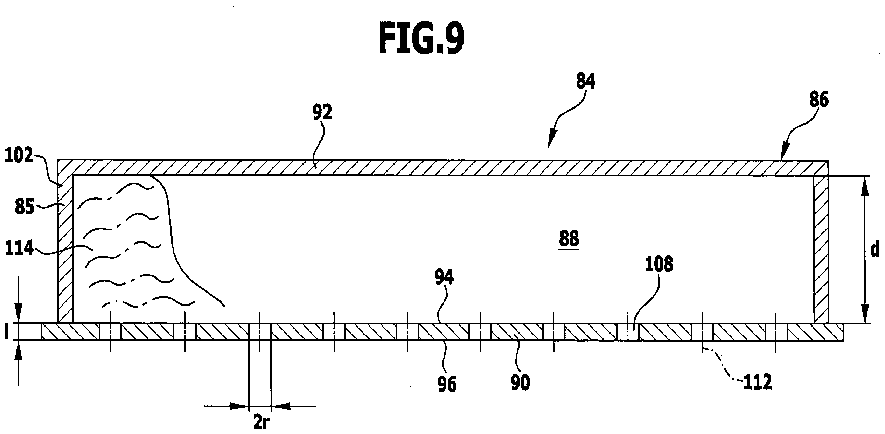

Der Lochplattenresonator 84 weist (Figur 9) eine Kammer 85 mit einer Kammerwandung 86 auf. Diese Kammerwandung 86 begrenzt einen Kammerraum 88. Der Kammerraum 88 ist durch eine Lochplatte 90 geschlossen.

Bei einem Ausführungsbeispiel (Figur 9) stützt sich die Lochplatte 90 an der Kammerwandung 86 ab und ist an dieser angeordnet. Beispielsweise ist die Kammerwandung 86 mit der Lochplatte 90 verbunden.

Bei einer Ausführungsform umfasst die Kammerwandung 86 eine Deckelwand 92. Diese Deckelwand 92 ist beabstandet zu der Lochplatte 90 und dieser gegenüberliegend. Zwischen der Deckelwand 92 und der Lochplatte 90 ist der Kammerraum 88 gebildet.

Bei einer Ausführungsform liegen die Lochplatte 90 und die Deckelwand 92 parallel zueinander.

Die Lochplatte 90 hat eine erste Seite 94. Die erste Seite 94 ist dem Kammerraum 88 zugewandt. Sie ist ferner der Deckelwand 92 zugewandt. Die Lochplatte 90 umfasst ferner eine zweite Seite 96. Die zweite Seite 96 liegt der ersten Seite 94 gegenüber. Zwischen der ersten Seite 94 und der zweiten Seite 96 erstreckt sich die Lochplatte 90.

Die zweite Seite 96 der Lochplatte 90 ist schallwirksam der Geräuschquelle (bei dem Sauger 10 der Fremdluftventileinrichtung 33) zugewandt. Schallwellen können sich von dieser Geräuschquelle zu der Lochplatte 90 hin ausbreiten und durch Öffnungen ("Löcher") in der Lochplatte 90 in den Kammerraum 88 eintreten.

Bei einem Ausführungsbeispiel (Figur 9) sind die erste Seite 94 und die zweite Seite 96 parallel zueinander. Die Lochplatte 90 ist dann entsprechend eben ausgebildet.

Bei einem Ausführungsbeispiel umfasst der Lochplattenresonator 84 eine erste Querwand und eine zweite Querwand. Diese sind beabstandet zueinander.

Sie sind beispielsweise parallel zueinander ausgerichtet.

Die erste Querwand und die zweite Querwand sitzen an der Deckelwand 92 und ragen quer über diese hinaus.

Ferner umfasst der Lochplattenresonator 84 eine erste Längswand 102 und eine zweite Längswand 104. Die erste Längswand 102 und die zweite Längswand 104 sind beabstandet zueinander und weisen einander zu.

Die erste Längswand 102 und die zweite Längswand 104 sind beispielsweise parallel zueinander ausgebildet.

Die erste Längswand 102 und die zweite Längswand 104 sitzen an der Deckelwand 92 und ragen über diese hinaus. Die erste Längswand 102 und die zweite Längswand 104 liegen quer zu der ersten Querwand und der zweiten Querwand. Die erste Querwand, die zweite Querwand, die erste Längswand 102 und die zweite Längswand 104 bilden eine (Lateral-)Wandung 106, welche an der Deckelwand 92 sitzt und den Kammerraum 98 lateral schließt. An dieser Wandung 106 wiederum ist die Lochplatte 90 angeordnet und stützt sich insbesondere an Stirnseiten dieser Wandung 106 ab.

Bei einem Ausführungsbeispiel sind die erste Querwand 98, die zweite Querwand 100, die erste Längswand 102 und die zweite Längswand 104 gerade ausgebildet. Die Querwände sind beispielsweise rechtwinklig zu den Längswänden 102, 104 angeordnet. Der Kammerraum 88 hat dann eine Hohl-Quaderform. Auch andere Ausgestaltungen sind möglich, wie untenstehend erläutert wird.

Die Kammerwandung 96 ist insbesondere aus einem schallharten Material mit einem Reflexionsgrad für Schall von größer als 94 % ausgebildet, welches dementsprechend eine geringe Absorptionsfähigkeit für Schall aufweist.

In der Lochplatte 90 sind Öffnungen ("Löcher") 108 angeordnet, welche zwischen der ersten Seite 94 und der zweiten Seite 96 durchgehend sind. An der ersten Seite 94 münden die Öffnungen in den Kammerraum 88. An der zweiten Seite 96 münden die Öffnungen 108 in einen Kanal, welcher schallführend ist. Der Kanal ist zwischen der Geräuschquelle, das heißt der Fremdluftventileinrichtung 33, und der Lochplatte 90 angeordnet.

An der Lochplatte 90 ist eine Mehrzahl von Öffnungen 108 gebildet. Diese sind insbesondere regemäßig angeordnet. Sie sind insbesondere auf Gitterpunkten eines zweidimensionalen Gitters angeordnet. Elementarzellen dieses Gitters sind beispielsweise Quadrate, Rechtecke, Trapeze, Dreiecke usw.

Bei einem Ausführungsbeispiel haben die Öffnungen 108 einen kreisrunden Querschnitt. Sie haben dadurch eine (hohl-)zylindrische Form.

Eine Erstreckungsrichtung 112 einer Öffnung 108 ist beispielsweise parallel zu den Querwänden beziehungsweise Längswänden 102, 104 orientiert. Die Erstreckungsrichtung 112 ist insbesondere senkrecht zu der ersten Seite 94 beziehungsweise zweiten Seite 96 der Lochplatte 90 orientiert. Sie ist ferner insbesondere senkrecht zu der Deckelwand 92 orientiert.

In dem Kammerraum 88 kann ganz oder teilweise ein schallabsorbierendes Material 114 wie Mineralfaserwolle angeordnet sein.

Der Lochplattenresonator 84 ist ein Lochplattenabsorber, welcher schallabsorbierende Eigenschaften hat. Durch eine schallharte Ausbildung der Kammerwandung 86, das heißt durch entsprechend geringe Schallabsorptionsfähigkeiten der Kammerwandung 86 wird die schallabsorbierende Wirkung verbessert.

Die Dimensionierung des Lochplattenresonators 84 bezüglich seinen geometrischen Abmessungen und der Anordnung und Abmessung der Öffnungen 108 bestimmt den effektiven Frequenzbereich für die Schallabsorption.

Bei einem geometrischen Aufbau des Lochplattenresonators 84 wie in der Figur 9 gezeigt mit einem quaderförmigen Kammerraum 88 und senkrecht aufeinanderstehenden Querwänden und Längswänden 102, 104, wobei die Wandung 106 wiederum senkrecht auf die Lochplatte 90 und die Deckelwand 92 steht, ergibt sich eine Mittenfrequenz $f_0$ als

$$f_0 = \frac{c}{2\pi}\sqrt{\frac{\varepsilon}{d(l + 2\pi r/4)}} \quad (1)$$

l ist dabei die Dicke der Lochplatte 90 zwischen der ersten Seite 94 und der zweiten Seite 96 plus einer Mündungskorrektur; d ist die Höhe des Kammerraums 88 zwischen der ersten Seite 94 der Lochplatte 90 und einer Innenseite der Deckelwand 92; c ist die Schallgeschwindigkeit. (Vergleiche dazu R. Lerch, G. Sessler, D. Wolf, "Technische Akustik", Springer 2009, S. 296.) Die genannte Formel gilt für kreisrunde Öffnungen 108 mit einem Durchmesser 2r.

Die Größe $\varepsilon$ ergibt sich zu

$$\varepsilon = \text{Öffnungsfläche} / \text{Gesamtfläche} \quad (2)$$

Die Öffnungsfläche ist dabei die Öffnungsfläche (Mündungsfläche) einer Öffnung 108. Die Gesamtfläche ist die Gesamtfläche der Lochplatte 90, welche der Geräuschquelle ausgesetzt ist, das heißt welche mit Schallwellen beaufschlagt wird.

Bei dem Sauger 10 entspricht die Gesamtfläche 10 derjenigen Fläche der Lochplatte 90, welche dem Kanal zuweist.

Bei einem typischen Ausführungsbeispiel insbesondere für einen Sauger mit Fremdluftventileinrichtung 33 ist der Lochplattenresonator 84 so ausgebildet, dass die Mittenfrequenz $f_0$ bei circa 675 Hz liegt.

Es hat sich für einen Sauger 10 mit Fremdluftventileinrichtung eine Lärmminderung des Maximalpegels um größer 2,5 dB und beispielsweise um circa 5 dB realisieren lassen.

Grundsätzlich weist ein Lochplattenresonator folgende charakteristische Größen auf: Resonanzfrequenz (Mittenfrequenz), Öffnungsdurchmesser, Resonatorhöhe (Höhe des Kammerraums), Dicke der Lochplatte und Lochabstand. Für eine konkrete Anwendung werden diese Größen so eingestellt, dass sich für die relevanten Frequenzen eine ausreichende Lärmminderung im Maximalpegel beispielsweise um mehr als 2,5 dB ergibt.

Bei einem ersten Ausführungsbeispiel eines erfindungsgemäßen Sauggeräts ist der Saugkopf 14 modifiziert. In ihm ist ein Führungskanal 120 angeordnet. Dieser Führungskanal 120 dient zur gezielten Zuströmung von Luft zu der Fremdluftventileinrichtung 33 als Abreinigungseinrichtung.

Bei einem Ausführungsbeispiel (Figuren 3 bis 5) umfasst der Führungskanal 120 einen ersten Bereich 122 mit einer ersten Erstreckungsachse 124. An den ersten Bereich 122 schließt sich ein zweiter Bereich 126 mit einer zweiten Erstreckungsachse 128 an. An den zweiten Bereich 126 schließt sich ein dritter Bereich 130 mit einer dritten Erstreckungsachse 132 an.

Die erste Erstreckungsachse 124 liegt quer und insbesondere senkrecht zu der zweiten Erstreckungsachse 128. Die dritte Erstreckungsachse 132 liegt quer und insbesondere senkrecht zu der zweiten Erstreckungsachse 128. Die erste Erstreckungsachse 124 und die dritte Erstreckungsachse 132 sind insbesondere näherungsweise parallel zueinander.

Das Filter 22 liegt zwischen dem ersten Bereich 122 und dem dritten Bereich 130. (Eine Verbindungsachse, welche den ersten Bereich 122 und den dritten Bereich 130 verbindet, geht durch das Filter 22.)

Der zweite Bereich 126 liegt oberhalb der Fremdluftventileinrichtung 33.

Der Führungskanal 120 hat eine C-Form oder Klammerform und sitzt auf der Kombination von Filtereinrichtung 21 und Fremdluftventileinrichtung 33 auf, wobei der erste Bereich 122 und der dritte Bereich 130 gewissermaßen Schenkel bilden, welche an dieser Kombination seitlich anliegen.

Der Führungskanal 120 weist einen ersten Anschluss 134 auf, über welchen er an die Fremdluftventileinrichtung 33 angekoppelt ist. Über den ersten Anschluss 134 wird der Fremdluftventileinrichtung 33 Fremdluft bereitgestellt, welche dann durch die Durchgangsöffnungen der Ventilhalterung 36 in die Absaugleitung 24 einströmen kann und dabei das Filter 22 auf seiner Reinseite 48 schlagartig mit Fremdluft beaufschlagt.

Der erste Anschluss 134 ist insbesondere durch eine oder mehrere Öffnungen in Korrespondenz mit den Durchgangsöffnungen der Ventilhalterung 36 gebildet.

Der erste Anschluss 134 sitzt an dem zweiten Bereich 126. Er sitzt insbesondere mittig an dem zweiten Bereich 126 des Führungskanals 120.

Der Führungskanal 120 weist ferner einen zweiten Anschluss 136 auf. Der zweite Anschluss 136 ist an dem ersten Bereich 122 angeordnet. Er sitzt insbesondere auf einer Höhe des Filters 22.

Der zweite Anschluss 136 ist angekoppelt an eine Abluftführung des Saugaggregats 26. Das Saugaggregat 26 stellt bei einem Saugvorgang schmutzfreie Abluft bereit. Diese wird üblicherweise an die Umgebung abgegeben.

Bei dem Ausführungsbeispiel gemäß den Figuren 3 bis 5 wird Abluft des Saugaggregats 26 vollständig an den zweiten Anschluss 136 abgegeben und damit vollständig in den Führungskanal 120 in den ersten Bereich 122 eingekoppelt. Dementsprechend ist eine Abluftführung des Saugaggregats 26 bis zu dem ersten Anschluss 134 so fluiddicht ausgebildet, dass Abluft vollständig an dem zweiten Anschluss 136 in den Führungskanal 120 eingekoppelt wird.

Der Führungskanal 120 weist ferner einen dritten Anschluss 138 auf. Dieser dritte Anschluss 138 ist an dem dritten Bereich 130 angeordnet.

Der dritte Anschluss 138 mündet in die Umgebung 140 des Sauggeräts.

Ein Gehäuse 142 des Saugkopfs 14 weist an dem dritten Anschluss 138 eine Gitterstruktur 144 auf.

Der Führungskanal 120 erstreckt sich zwischen dem zweiten Anschluss 136 und dem dritten Anschluss 138. Abluft, welche über den zweiten Anschluss 136 in den Führungskanal 120 eintritt, tritt am dritten Anschluss 138 in die Umgebung 140 aus, wenn kein Filterabreinigungsvorgang durchgeführt wird.

Mittig zwischen dem zweiten Anschluss 136 und dem dritten Anschluss 138 liegt der ersten Anschluss 134.

An dem dritten Anschluss 138 kann auch Luft aus der Umgebung 140 in den Führungskanal 120 eintreten und zu dem ersten Anschluss 134 strömen.

Der zweite Anschluss 136 und der dritte Anschluss 138 sind an gegenüberliegenden Gehäuseseitenbereichen 146a, 146b angeordnet. Zwischen dem zweiten Anschluss 136 und dem dritten Anschluss 138 ist die Kombination aus Filtereinrichtung 21 und Fremdluftventileinrichtung 33 positioniert.

Bezogen auf eine Strömungsführung als auch geometrisch liegt der erste Anschluss 134 zwischen dem zweiten Anschluss 136 und dem dritten Anschluss 138.

An dem Führungskanal 120 ist in dem Saugkopf 14 an dem zweiten Bereich 126 ein Lochplattenresonator 148 mit einer Lochplatte 150 angeordnet. Die Lochplatte 150 liegt dabei dem ersten Anschluss 134 gegenüber.

Der Führungskanal 120 weist in dem zweiten Bereich 126 eine Wandung 152 auf. Die Lochplatte 150 bildet ein Teil 154 dieser Wandung 152.

Die Wandung 152 weist außerhalb des Teils 154 einen Bereich 156 auf, welcher zumindest teilweise über dem ersten Bereich 122 bzw. dem dritten Bereich 130 liegt. Der entsprechende Bereich 156 ist fluiddicht ausgebildet.

Die Lochplatte 150 weist in der zweiten Erstreckungsachse 128 bei einem Ausführungsbeispiel eine größere Länge auf als der erste Anschluss 134 in dieser Richtung.

Der Lochplattenresonator 148 mit der Lochplatte 150 ist grundsätzlich so ausgebildet und funktioniert so wie oben anhand des Lochplattenresonators 84 beschrieben.

Bei dem in den Figuren 3 bis 5 gezeigten Ausführungsbeispiel ist die Lochplatte 150 abgewinkelt ausgebildet. Sie umfasst einen ersten Bereich 158, einen zweiten Bereich 160 und einen dritten Bereich 162. Der erste Bereich 158 und der dritte Bereich 162 sitzen jeweils gegenüberliegend an einer Seite des zweiten Bereichs 160. Sie liegen abgewinkelt zu dem zweiten Bereich 160 in einem stumpfen Winkel beispielsweise in der Größenordnung von 10°.

Der erste Bereich 158 und der dritte Bereich 162 setzen sich in die Bereiche 156 insbesondere fluchtend fort.

Es kann vorgesehen sein, dass zwischen der Lochplatte 150 und den Bereichen 156 eine Fluiddichtung angeordnet ist.

Die Lochplatte 150 ist bei dem beschriebenen Ausführungsbeispiel so ausgestaltet, dass der Führungskanal 120 an dem zweiten Bereich 126 dem ersten Anschluss 134 gegenüberliegend domförmig ausgebildet ist.

Der Lochplattenresonator 148 weist oberhalb der Lochplatte 150 im Saugkopf 14 einen Kammerraum 164 auf.

Bei einem Ausführungsbeispiel ist der Lochplattenresonator 148 an einem Gehäusedeckel 166 fixiert. Der Gehäusedeckel 166 kann geöffnet werden, um einen Zugriff auf die Fremdluftventileinrichtung 33 und die Filtereinrichtung 21 zu ermöglichen.

Es kann vorgesehen sein, dass der Lochplattenresonator 148 fest mit dem Gehäusedeckel 166 verbunden ist. Bei einer Öffnung des Gehäusedeckels 166 wird dann der Lochplattenresonator mit der Lochplatte 150 mitbewegt und für einen Zugang zu der Fremdluftventileinrichtung 33 bzw. der Filtereinrichtung 21 muss dann nicht nochmals der Lochplattenresonator 148 entfernt werden.

Das Sauggerät 10 in der Modifikation gemäß den Figuren 3 bis 5 funktioniert wie folgt:

Abluft des Saugaggregats 26 wird vollständig an dem zweiten Anschluss 136 in den Führungskanal 120 eingekoppelt.

In den Figuren 3 bis 5 ist Abluft durch einen Doppelpfeil 167 angedeutet.

Die Abluft durchströmt dann den ersten Bereich 122 und den zweiten Bereich 126 des Führungskanals 120. Die Abluft ist dem ersten Anschluss 134 bereitgestellt, so dass bei einem Abreinigungsvorgang des Filters 22 entsprechende Fremdluft bereitsteht.

Abluft durchströmt grundsätzlich den Führungskanal 120 und tritt an dem dritten Anschluss 138 in die Umgebung 140.

An dem dritten Anschluss 138 kann auch Luft aus der Umgebung 140 in den Führungskanal 120 strömen und ist dadurch dem ersten Anschluss 134 bereitgestellt.

Luft im Führungskanal 120 strömt im zweiten Bereich 126 an dem Lochplattenresonator 148 vorbei. Der erste Anschluss 134 liegt gegenüber der Lochplatte 150 des Lochplattenresonators 148. Es tritt dadurch eine Verringerung der Geräuschemission ein.

Auch Geräusche, die bei der Abreinigung des Filters 22 entstehen, werden gedämpft.

An dem Lochplattenresonator 148 (bzw. 84) erfolgt eine Schallabsorption durch Reibung einer Luftsäule an Öffnungswandungen 106 der Öffnungen 108.

Der Führungskanal 120 ist in dem Saugkopf 14 ausgebildet. Er ist insbesondere so ausgebildet, dass in ihm keine Strömungsbarrieren enthalten sind. Er sorgt für eine gezielte Luftführung.

Es wird eine definierte Strömungsführung für Abluft als Fremdluftquelle bereitgestellt. Üblicherweise weist Abluft des Saugaggregats 26 einen geringeren Verschmutzungsgrad als Luft aus der Umgebung 140 auf. Es wird dadurch eine effektive Filterabreinigung erreicht.

Der Führungskanal 120 weist einen ersten Zuströmbereich 168 zwischen dem zweiten Anschluss 136 und dem ersten Anschluss 134 auf, über den Fremdluft dem ersten Anschluss 134 bereitstellbar ist. Er weist ferner einen zweiten Zuströmbereich 170 zwischen dem dritten Anschluss 138 und dem ersten Anschluss 134 auf. Wenn beispielsweise der Saugschlauch 18 verstopft ist und keine Abluft mehr bereitgestellt wird, dann kann noch Luft in dem zweiten Zuströmbereich 170 aus der Umgebung 140 einströmen und es wird trotzdem an dem ersten Anschluss 134 Fremdluft bereitgestellt.

Bei einem Betrieb des Sauggeräts 10 strömt ständig Abluft an der Fremdluftventileinrichtung 33 vorbei (sofern der Saugschlauch 18 nicht verstopft ist). Dies bewirkt eine Kühlung der Elektromotoreinrichtung 25.

Die Schallemission des Sauggeräts 10 ist effektiv verringert durch den Lochplattenresonator 148.

Bei einem weiteren Ausführungsbeispiel (Figuren 6 bis 8) ist ein Führungskanal 180 vorgesehen. Der Führungskanal 180 umfasst wie der Führungskanal 120 einen ersten Bereich 182, an welchen sich ein zweiter Bereich 184 anschließt. An den zweiten Bereich 184 schließt sich wiederum ein dritter Bereich 186 an.

Bezogen auf Erstreckungsachsen liegen der erste Bereich 182 und der dritte Bereich 186 quer und insbesondere senkrecht zu dem zweiten Bereich 184.

An dem zweiten Bereich 184 ist ein erster Anschluss 188 angeordnet, über welchen entsprechend dem ersten Anschluss 134 der Fremdluftventileinrichtung 33 direkt Fremdluft zuführbar ist.

An dem ersten Bereich 182 ist ein zweiter Anschluss 190 angeordnet. Über diesen zweiten Anschluss 190 ist Abluft aus dem Saugaggregat 26 in den Führungskanal 180 eingekoppelt.

Ferner weist der Führungskanal 180 einen dritten Anschluss 192 auf, welcher an dem dritten Bereich 186 positioniert ist. Über den dritten Anschluss 192 kann entsprechend zu dem dritten Anschluss 138 Luft, welche den Führungskanal 180 durchströmt hat, in die Umgebung 140 austreten. Ferner kann Luft aus der Umgebung 140 am dritten Anschluss 192 in den Führungskanal 180 eintreten.

Weiterhin weist der Führungskanal 180 an dem dritten Bereich 186 einen vierten Anschluss 194 auf.

Der vierte Anschluss 194 ist an die Abluftführung des Saugaggregats 26 gekoppelt. An dem vierten Anschluss 194 tritt Abluft des Saugaggregats 26 in den Strömungskanal 180 ein.

Ferner weist der Führungskanal 180 in dem ersten Bereich 182 einen fünften Anschluss 196 auf. Der fünfte Anschluss 196 mündet in die Umgebung 140. Es kann Luft aus dem Führungskanal 180 an dem fünften Anschluss 196 in die Umgebung 140 austreten und Luft aus der Umgebung in den Führungskanal 180 eintreten.

Insbesondere ist an dem fünften Anschluss 196 eine Gitterstruktur entsprechend der Gitterstruktur 144 angeordnet.

Die Kombination aus Filtereinrichtung 21 und Fremdluftventileinrichtung 33 ist zwischen dem ersten Bereich 182 und dem dritten Bereich 186 des Führungskanals 180 positioniert. Sie ist ferner zwischen dem zweiten Anschluss 190 und dem dritten Anschluss 192 positioniert. Sie ist ferner zwischen dem vierten Anschluss 194 und dem fünften Anschluss 196 positioniert.

Insbesondere ist der erste Anschluss 188 mittig bzw. symmetrisch zwischen der Kombination aus zweitem Anschluss 190 und fünftem Anschluss 196 auf der einen Seite und der Kombination aus drittem Anschluss 192 und dem vierten Anschluss 194 auf der anderen Seite positioniert.

Der zweite Anschluss 190 und der fünfte Anschluss 196 sind nahe zueinander an dem gleichen Gehäuseseitenbereich positioniert. Entsprechend sind der dritte Anschluss 192 und der vierte Anschluss 194 nahe zueinander an dem gleichen Gehäuseseitenbereich positioniert.

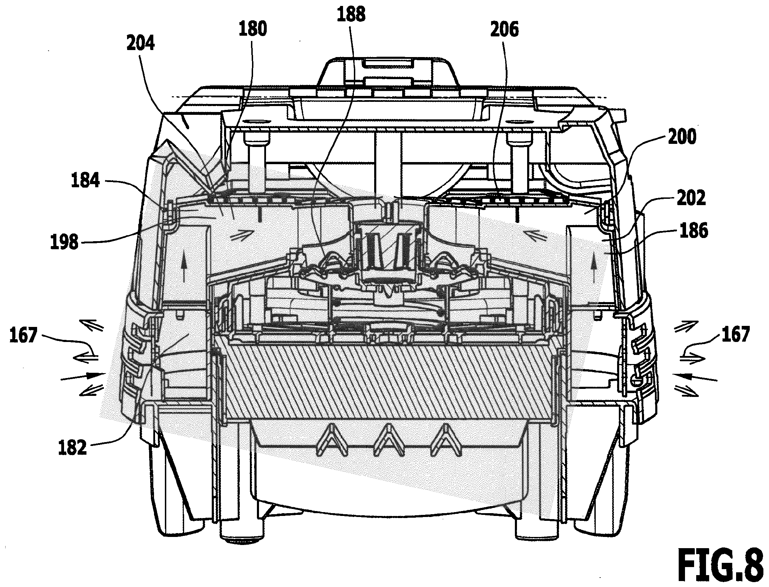

Der Führungskanal 180 ermöglicht einen ersten Zuströmbereich zu dem ersten Anschluss 188, welcher zwischen dem zweiten Anschluss 190 und dem ersten Anschluss 188 liegt. In den Figuren 6 und 8 ist dieser erste Zuströmbereich mit 198 bezeichnet.

An dem Führungskanal 120 ist ferner ein zweiter Zuströmbereich 200 gebildet. Dieser zweite Zuströmbereich ist zwischen dem dritten Anschluss 192 und dem ersten Anschluss 188 gebildet.

In dem ersten Zuströmbereich 198 bzw. dem zweiten Zuströmbereich 200 kann Abluft von dem Saugaggregat 96 zu dem ersten Anschluss 188 strömen.

Weiterhin ist ein dritter Zuströmbereich 202 vorhanden, welcher zwischen dem vierten Anschluss 194 und dem ersten Anschluss 188 liegt.

Weiterhin ist ein vierter Zuströmbereich 204 vorhanden, welcher zwischen dem fünften Anschluss 196 und dem ersten Anschluss 188 liegt.

Über den dritten Zuströmbereich 202 und den vierten Zuströmbereich 204 kann Luft aus der Umgebung 140 dem ersten Anschluss 188 zuströmen. Dies ist beispielsweise vorteilhaft, wenn nicht genügend Abluft (beispielsweise aufgrund einer Verstopfung des Saugschlauchs 18) bereitsteht.

Der erste Zuströmbereich 198 und der vierte Zuströmbereich 204 überlappen sich. Der zweite Zuströmbereich 200 und der dritte Zuströmbereich 202 überlappen sich.

Der Führungskanal 180 ist auch bezüglich seiner Anschlüsse 190, 192, 194, 196 symmetrisch ausgebildet. Es lässt sich eine symmetrische Abluftzuströmung und -abströmung sowie symmetrische Strömung von Luft aus der Umgebung 140 erreichen.

Dem Führungskanal 180 ist ein Lochplattenresonator 206 zugeordnet.

Eine entsprechende Lochplatte liegt dem ersten Anschluss 188 gegenüber. Sie bildet eine Wandung des Führungskanals 180.

Der Führungskanal 180 ist in den Saugkopf 14 integriert.

Die Ausführungsform gemäß den Figuren 6 bis 8 funktioniert grundsätzlich gleich wie die Ausführungsform gemäß den Figuren 3 bis 5.

Durch den Führungskanal 120 bzw. 180 in dem Saugkopf 14 ist sichergestellt, dass gespeicherte Luft und nachkommende Abluft und zusätzlich aus der Umgebung 140 eintretende Luft als Fremdluft für einen Abreinigungsvorgang bereitgestellt sind. Durch die Abluft des Saugaggregats 26 wird Fremdluft mit Überdruck bereitgestellt. Die Abluft des Saugaggregats 26, d. h. Prozessluft, unterstützt die Abreinigung. Es wird Fremdluft mit einem ausreichenden Volumenstrom und mit einem ausreichenden Überdruck für die Abreinigung bereitgestellt.

Durch Luft aus der Umgebung 140, welche in dem Führungskanal 120 bzw. 180 strömen kann und dem ersten Anschluss 134 bzw. 188 bereitgestellt wird, wird der Strömungswiderstand verringert.

Bei dem Ausführungsbeispiel gemäß den Figuren 3 bis 5 wird gezielt die komplette Abluft über den ersten Anschluss 134 geleitet. Es ergibt sich bei dieser Ausführungsform eine effektive Geräuschminimierung.

Bei der erfindungsgemäßen Lösung sowohl nach den Figuren 3 bis 5 als auch nach den Figuren 6 bis 8 wird Abluft vollständig oder ein erheblicher Anteil von Abluft als Fremdluft verwendet. Abluft ist gefilterte Luft und folglich sauberer. Dadurch wird die Lebensdauer des Saugaggregats 26 erhöht.

**Bezugszeichenliste**

| | |
|---|---|
| 10 | Staubsauger |
| 12 | Schmutzsammelbehälter |
| 14 | Saugkopf |
| 16 | Saugeinlass |
| 18 | Saugschlauch |
| 20 | Saugauslass |
| 21 | Filtereinrichtung |
| 22 | Filter |
| 24 | Absaugleitung |
| 25 | Elektromotoreinrichtung |
| 26 | Saugaggregat |
| 27 | Elektromotor |
| 28 | Gebläse |
| 29 | Abluftöffnung |
| 30 | Saugströmung |
| 32 | Schmutzseite |
| 33 | Abreinigungseinrichtung, Fremdluftventileinrichtung |
| 34 | Fremdluftventil |
| 36 | Ventilhalterung |
| 38 | Ventilteller |
| 40 | Schließfeder |
| 42 | Filterhalterung |

| | |
|---|---|
| 44 | Anschlagfeder |
| 46 | Seitliche Öffnung |
| 48 | Reinseite |
| 50 | Elektromagnet |
| 52 | Ringraum |
| 54 | Führungshülse |
| 56 | Eisenplatte |
| 58 | Stirnkante |
| 62 | Steuerungseinrichtung |
| 64 | Batterie |
| 68 | Batteriefach |
| 70 | Klappe |
| 82 | Taster |
| 84 | Lochplattenresonator |
| 85 | Kammer |
| 86 | Kammerwandung |
| 88 | Kammerraum |
| 90 | Lochplatte |
| 92 | Deckelwand |
| 94 | Erste Seite |
| 96 | Zweite Seite |
| 102 | Erste Längswand |
| 104 | Zweite Längswand |
| 106 | Wandung |
| 108 | Öffnung |
| 112 | Erstreckungsrichtung |
| 114 | Schallabsorbierendes Material |
| 120 | Führungskanal |
| 122 | erster Bereich |
| 124 | erste Erstreckungsachse |
| 126 | zweiter Bereich |
| 128 | zweite Erstreckungsachse |
| 130 | dritter Bereich |
| 132 | dritte Erstreckungsachse |
| 134 | erster Anschluss |
| 136 | zweiter Anschluss |
| 138 | dritter Anschluss |
| 140 | Umgebung |
| 142 | Gehäuse |
| 144 | Gitterstruktur |
| 146a, b | Gehäuseseitenbereich |
| 148 | Lochplattenresonator |
| 150 | Lochplatte |
| 152 | Wandung |
| 154 | Teilwandung |
| 156 | Bereich |
| 158 | erster Bereich |
| 160 | zweiter Bereich |
| 162 | dritter Bereich |
| 164 | Kammerraum |
| 166 | Gehäusedeckel |
| 167 | Abluft |
| 168 | erster Zuströmbereich |
| 170 | zweiter Zuströmbereich |
| 180 | Führungskanal |
| 182 | erster Bereich |
| 184 | zweiter Bereich |
| 186 | dritter Bereich |

| 188 | erster Anschluss |
|---|---|
| 190 | zweiter Anschluss |
| 192 | dritter Anschluss |
| 194 | vierter Anschluss |
| 196 | fünfter Anschluss |
| 198 | erster Zuströmbereich |
| 200 | zweiter Zuströmbereich |
| 202 | dritter Zuströmbereich |
| 204 | vierter Zuströmbereich |
| 206 | Lochplattenresonator |

**Patentansprüche**

1. Sauggerät, umfassend ein Saugaggregat (26), einen Schmutzsammelbehälter (12), eine Filtereinrichtung (21), wobei der Schmutzsammelbehälter (12) über die Filtereinrichtung (21) mit dem Saugaggregat (26) in Strömungsverbindung steht, und eine Abreinigungseinrichtung (33) für die Filtereinrichtung (21), welche eine Fremdluftventileinrichtung (33) umfasst, **gekennzeichnet durch** mindestens einen Führungskanal (120; 180) für Luft, welcher einen ersten Anschluss (134; 188) aufweist, der in fluidwirksamer Verbindung mit der Abreinigungseinrichtung zur Bereitstellung von Fremdluft aus dem mindestens einen Führungskanal (120; 180) steht, einen zweiten Anschluss (136; 190) zur Einkopplung von Abluft des Saugaggregats (26) in den mindestens einen Führungskanal (120; 180) aufweist, und einen dritten Anschluss (138; 192) aufweist, welcher in fluidwirksamer Verbindung mit der Umgebung (140) des Sauggeräts steht, wobei über den dritten Anschluss (138; 192) Luft aus der Umgebung (140) in den mindestens einen Führungskanal (120; 180) einströmbar ist.

2. Sauggerät nach Anspruch 1, **dadurch gekennzeichnet, dass** der dritte Anschluss (138; 192) so ausgebildet ist, dass an ihm Abluft des Saugaggregats (26) in die Umgebung (140) austretbar ist.

3. Sauggerät nach Anspruch 1 oder 2, **dadurch gekennzeichnet, dass** der mindestens eine Führungskanal (120; 180) sich zwischen dem zweiten Anschluss (136; 190) und dem dritten Anschluss (138; 192) erstreckt.

4. Sauggerät nach einem der vorangehenden Ansprüche, **dadurch gekennzeichnet, dass** der erste Anschluss (134; 188) bezogen auf eine Strömungsführung und/oder geometrisch zwischen dem zweiten Anschluss (136; 190) und dem dritten Anschluss (138; 192) und insbesondere mindestens näherungsweise mittig zwischen dem zweiten Anschluss (136; 190) und dem dritten Anschluss (138; 192) positioniert ist.

5. Sauggerät nach einem der vorangehenden Ansprüche, **dadurch gekennzeichnet, dass** der mindestens eine Führungskanal (120; 180) einen ersten Bereich (122; 182) mit einer ersten Erstreckungsachse (124) aufweist, an welchem der zweite Anschluss (136; 190) liegt, einen zweiten Bereich (126; 184) mit einer zweiten Erstreckungsachse (128) aufweist, an welchem der erste Anschluss (134; 188) liegt, und einen dritten Bereich (130; 186) mit einer dritten Erstreckungsachse (132) aufweist, an welchem der dritte Anschluss (138; 192) liegt, wobei die erste Erstreckungsachse (124) und/oder die dritte Erstreckungsachse (132) quer zu der zweiten Erstreckungsachse (128) orientiert sind und insbesondere der erste Anschluss (134; 188) und der zweite Anschluss (136; 190) auf unterschiedlichen Höhen liegen und/oder der erste Anschluss (134; 188) und der dritte Anschluss (138; 192) auf unterschiedlichen Höhen liegen, und insbesondere dass der erste Bereich (122; 182) und/oder der dritte Bereich (130; 186) seitlich neben der Abreinigungseinrichtung (33) oder Filtereinrichtung (21) angeordnet sind.

6. Sauggerät nach einem der vorangehenden Ansprüche, **dadurch gekennzeichnet, dass** der mindestens eine Führungskanal (120; 180) mindestens teilweise an einem Gehäusebereich angeordnet oder gebildet ist, welcher den Schmutzsammelbehälter (12) und/oder die Filtereinrichtung (21) und/oder die Abreinigungseinrichtung (33) abdeckt.

7. Sauggerät nach einem der vorangehenden Ansprüche, **dadurch gekennzeichnet, dass** der mindestens eine Führungskanal (120) und der zweite Anschluss (136) so ausgebildet sind, dass die Abluft des Saugaggregats (26) vollständig in den mindestens einen Führungskanal (120) eintritt, und insbesondere dass der mindestens eine Führungskanal (120) und der dritte Anschluss (138) so ausgebildet sind, dass Abluft des Saugaggregats (26) außerhalb eines Abreinigungsvorgangs der Filtereinrichtung (21) nur an dem dritten Anschluss (138) in die Umgebung (140) austretbar ist, und insbesondere **gekennzeichnet durch** einen ersten Zuströmbereich (168) für Luft zu dem ersten Anschluss (134), welcher zwischen dem zweiten Anschluss (136) und dem ersten Anschluss (134) gebildet ist, und einen zweiten Zuströmbereich (170), welcher zwischen dem dritten Anschluss (138) und dem ersten Anschluss (134) gebildet ist.

8. Sauggerät nach einem der Ansprüche 1 bis 6, **dadurch gekennzeichnet, dass** an dem mindestens einen Führungskanal (180) ein vierter Anschluss (194) für Abluft des Saugaggregats (26) angeordnet ist, und insbesondere dass an dem mindestens einen Führungskanal (180) ein fünfter Anschluss (196) an die Umgebung (140) angeordnet ist, und insbesondere dass die Filtereinrichtung (21) und/oder die Abreinigungseinrichtung (33) geometrisch zwischen dem dritten Anschluss (192) und dem fünften Anschluss (196) positioniert sind, und insbesondere dass der dritte Anschluss (192) und der fünfte Anschluss (196) an gegenüberliegenden Gehäuseseiten positioniert sind, und insbesondere dass die Filtereinrichtung (21) und/oder die Abreinigungseinrichtung (33) geometrisch zwischen dem zweiten Anschluss (190) und dem vierten Anschluss (194) positioniert sind, und insbesondere dass der mindestens eine Führungskanal (180) spiegelsymmetrisch bezüglich des dritten Anschlusses (192) und fünften Anschlusses (196) und/oder des zweiten Anschlusses (190) und des vierten Anschlusses (194) ausgebildet ist, wobei insbesondere der erste Anschluss (188) auf einer Spiegelebene liegt, und insbesondere **gekennzeichnet durch** eine spiegelsymmetrische Strömungsführung für die Luftführung zu dem ersten Anschluss (188), und insbesondere dass der fünfte Anschluss (196) an einem gleichen Gehäuseseitenbereich wie der zweite Anschluss (190) liegt und der vierte Anschluss (194) an einem gleichen Gehäuseseitenbereich wie der dritte Anschluss (192) liegt, und insbesondere **gekennzeichnet durch** einen ersten Zuströmbereich (198) für Luft zu dem ersten Anschluss (188), welcher zwischen dem zweiten Anschluss (190) und dem ersten Anschluss (188) gebildet ist, einen zweiten Zuströmbereich (200), welcher zwischen dem dritten Anschluss (192) und dem ersten Anschluss (188) gebildet ist, einen dritten Zuströmbereich (202), welcher zwischen dem vierten Anschluss (194) und dem ersten Anschluss (188) gebildet ist, und einen vierten Zuströmbereich (204), welcher zwischen dem fünften Anschluss (196) und dem ersten Anschluss (188) gebildet ist, wobei insbesondere der erste Zuströmbereich (198) und der dritte Zuströmbereich (202) spiegelsymmetrisch zueinander sind und insbesondere der zweite Zuströmbereich (200) und der vierte Zuströmbereich (204) spiegelsymmetrisch zueinander sind.

9. Sauggerät nach einem der vorangehenden Ansprüche, **dadurch gekennzeichnet, dass** der Abreinigungseinrichtung (33) mindestens ein Lochplattenresonator (84; 148; 206) schallwirksam zugeordnet ist, wobei der mindestens eine Lochplattenresonator (84; 148; 206) eine Kammer (85) mit einem Kammerraum (88) und einer Kammerwandung (86) und mindestens eine Lochplatte (90), welche den Kammerraum (88) abdeckt, aufweist, und insbesondere dass der mindestens eine Lochplattenresonator (84; 148; 206) bezüglich geometrischen Dimensionen und Anordnung und Ausbildung von Öffnungen (108) in der mindestens einen Lochplatte (90) bezüglich einer Geräuschquelle (33) so dimensioniert ist, dass durch den mindestens einen Lochplattenresonator eine Lärmminderung im Maximalpegel von mindestens 2,5 dB erfolgt, und insbesondere dass der mindestens eine Lochplattenresonator (84; 148; 206) mit der mindestens einen Lochplatte (90) der Abreinigungseinrichtung (33) und insbesondere dem ersten Anschluss (134; 188) gegenüberliegend angeordnet ist, und insbesondere dass die mindestens eine Lochplatte (90) an der Kammerwandung (86) angeordnet ist und insbesondere sich eine Wandung (106) der Kammerwandung (86) an der Lochplatte (90) abstützt.

10. Sauggerät nach Anspruch 9, **dadurch gekennzeichnet, dass** die mindestens eine Lochplatte (90) des mindestens einen Lochplattenresonators (84; 148; 206) eine erste Seite (94) aufweist, welche dem Kammerraum (88) zugewandt ist, und eine zweite Seite (96) aufweist, welche der ersten Seite (94) gegenüberliegt, wobei eine Mehrzahl von Öffnungen (108) in der mindestens einen Lochplatte (90) vorgesehen sind, welche zwischen der ersten Seite (94) und der zweiten Seite (96) durchgehend sind, und insbesondere dass die erste Seite (94) und/oder die zweite Seite (96) eben ausgebildet sind, und insbesondere dass die erste Seite (94) und die zweite Seite (96) parallel zueinander sind, und insbesondere dass die Öffnungen (108) an der ersten Seite (94) in den Kammerraum (88) münden und an der zweiten Seite (96) dem ersten Anschluss zugewandt sind, und insbesondere dass die Öffnungen (108) an der zweiten Seite (96) in den mindestens einen Führungskanal (120; 180) münden und insbesondere in einen zweiten Bereich (126; 184) des mindestens einen Führungskanals (120; 180) münden.

11. Sauggerät nach Anspruch 9 oder 10, **dadurch gekennzeichnet, dass** die Kammerwandung (86) eine Deckelwand (92) aufweist, welche der mindestens einen Lochplatte (90) gegenüberliegt, und eine Wandung (106) aufweist, welche zwischen der Deckelwand (92) und der mindestens einen Lochplatte (90) liegt, und insbesondere dass die mindestens eine Lochplatte (90) und die Deckelwand (92) parallel ausgerichtet sind und insbesondere, dass der Kammerraum (88) eine (Hohl-)Quaderform hat.

12. Sauggerät nach einem der Ansprüche 9 bis 11, **dadurch gekennzeichnet, dass** die mindestens eine Lochplatte (150) nicht-eben ausgebildet ist und insbesondere einen ersten Bereich (182), zweiten Bereich (184) und dritten Bereich (186) aufweist, wobei der erste Bereich (182) und der dritte Bereich (186) gegenüberliegend an dem zweiten Bereich (184) angeordnet sind und winklig zu dem zweiten Bereich (184) liegen.

13. Sauggerät nach einem der Ansprüche 9 bis 12, **dadurch gekennzeichnet, dass** die Kammerwandung (86) eine erste Querwand (98), eine zweite Querwand (100), eine erste Längswand (102), eine zweite Längswand (104) und eine Deckelwand (92) aufweist, wobei die erste Querwand (98) und die zweite Querwand (100) beabstandet sind und einander zuweisen, die erste Längswand (102) und die zweite Längswand (104) zueinander beabstandet sind und einander zuweisen, die erste Querwand (98) und die erste Längswand (102) quer zueinander orientiert sind, und die Deckelwand (92) quer zu der ersten Querwand (98), der zweiten Querwand (100), der ersten Längswand (102) und der zweiten Längswand (104) orientiert ist, und insbesondere dass die erste Querwand (98) und die zweite Querwand (100) parallel orientiert sind und/oder die erste Längswand (102) und die zweite Längswand (104) parallel orientiert sind.

14. Sauggerät nach einem der Ansprüche 9 bis 13, **dadurch gekennzeichnet, dass** die Kammerwandung (86) mindestens teilweise aus einem schallharten Material hergestellt ist, und insbesondere dass der mindestens eine Lochplattenresonator (148; 206) und insbesondere die mindestens eine Lochplatte (150) eine Wandung des mindestens einen Führungskanals (120; 180) bildet, und insbesondere dass der mindestens eine Lochplattenresonator (148; 206) an einem Gehäusedeckel (166) angeordnet ist und insbesondere an diesem fixiert ist.

15. Verfahren zum Betreiben eines Sauggeräts, wobei das Sauggerät ein Saugaggregat (26), einen Schmutzsammelbehälter (12), eine Filtereinrichtung (21), wobei der Schmutzsammelbehälter (12) über die Filtereinrichtung (21) mit dem Saugaggregat (26) in Strömungsverbindung steht, und eine Abreinigungseinrichtung (33) für die Filtereinrichtung (21), welche eine Fremdluftventileinrichtung (33) aufweist, umfasst, bei dem Abluft des Saugaggregats (26) definiert über mindestens einen Führungskanal (120; 180) der Abreinigungseinrichtung zugeleitet wird, wobei die Abluft aus dem mindestens einen Führungskanal (120; 180) über mindestens einen Anschluss (138; 192, 196) an die Umgebung (140) abgegeben wird, und wobei der mindestens eine Anschluss (138; 192, 196) auch als Eintrittsanschluss für Luft aus der Umgebung (140) ausgebildet ist, so dass Luft aus der Umgebung (140) durch den mindestens einen Führungskanal (120; 180) der Abreinigungseinrichtung (33) zuführbar ist.

**Claims**

1. A suction unit comprising a suction apparatus (26), a dirt collection container (12), a filter device (21), wherein the dirt collection container (12) is connected in terms of flow via the filter device (21) to the suction apparatus (26), and a cleaning device (33) for the filter device (21), which cleaning device comprises an external-air valve device (33), **characterized by** at least one guide duct (120; 180) for air, which at least one guide duct has a first port (134; 188) which is connected in terms of fluid action to the cleaning device for the provision of external air from the at least one guide duct (120; 180), a second port (136; 190) for the coupling of exhaust air of the suction apparatus (26) into the at least one guide duct (120; 180), and a third port (138; 192) which is connected in terms of fluid action to the surroundings (140) of the suction unit, wherein air from the surroundings (140) is configured to flow into the at least one guide duct (120; 180) via the third port (138; 192).

2. The suction unit as claimed in claim 1, **characterized in that** the third port (138; 192) is formed such that exhaust air of the suction apparatus (26) is configured to emerge into the surroundings (140) at said third port.

3. The suction unit as claimed in claim 1 or 2, **characterized in that** the at least one guide duct (120; 180) extends between the second port (136; 190) and the third port (138; 192).

4. The suction unit as claimed in one of the preceding claims, **characterized in that** the first port (134; 188) is, with regard to flow guidance and/or geometrically, positioned between the second port (136; 190) and the third port (138; 192) and in particular at least approximately centrally between the second port (136; 190) and the third port (138; 192).

5. The suction unit as claimed in one of the preceding claims, **characterized in that** the at least one guide duct (120; 180) has a first region (122; 182) which has a first extent axis (124) and on which the second port (136; 190) is situated, a second region (126; 184) which has a second extent axis (128) and on which the first port (134; 188) is situated, and a third region (130; 186) which has a third extent axis (132) and on which the third port (138; 192) is situated, wherein the first extent axis (124) and/or the third extent axis (132) are oriented transversely with respect to the second extent axis (128) and, in particular, the first port (134; 188) and the second port (136; 190) are situated at different heights and/or the first port (134; 188) and the third port (138; 192) are situated at different heights, and in particular in that the first region (122; 182) and/or the third region (130; 186) are arranged laterally adjacent to the cleaning device (33) or filter device (21).

6. The suction unit as claimed in one of the preceding claims, **characterized in that** the at least one guide duct (120; 180) is arranged or formed at least partially on a housing region which covers the dirt collection container (12) and/or the filter device (21) and/or the cleaning device (33).

**7.** The suction unit as claimed in one of the preceding claims, **characterized in that** the at least one guide duct (120) and the second port (136) are formed such that the entirety of the exhaust air of the suction apparatus (26) enters the at least one guide duct (120), and in particular **in that** the at least one guide duct (120) and the third port (138) are formed such that, outside a cleaning process of the filter device (21), exhaust air of the suction apparatus (26) is configured to emerge into the surroundings (140) only at the third port (138), and in particular **characterized by** a first inflow region (168) for air to the first port (134), which first inflow region is formed between the second port (136) and the first port (134), and a second inflow region (170) which is formed between the third port (138) and the first port (134).

**8.** The suction unit as claimed in one of claims 1 to 6, **characterized in that** a fourth port (194) for exhaust air of the suction apparatus (26) is arranged on the at least one guide duct (180), and in particular **in that** a fifth port (196) to the surroundings (140) is arranged on the at least one guide duct (180), and in particular **in that** the filter device (21) and/or the cleaning device (33) are positioned geometrically between the third port (192) and the fifth port (196), and in particular **in that** the third port (192) and the fifth port (196) are positioned on opposite housing sides, and in particular **in that** the filter device (21) and/or the cleaning device (33) are positioned geometrically between the second port (190) and the fourth port (194), and in particular **in that** the at least one guide duct (180) is formed mirror-symmetrically with respect to the third port (192) and fifth port (196) and/or the second port (190) and the fourth port (194), wherein in particular, the first port (188) lies on a mirror plane, and in particular **characterized by** mirror-symmetrical flow guidance for the air guidance to the first port (188), and in particular in that the fifth port (196) is situated on the same housing side region as the second port (190) and the fourth port (194) is arranged on the same housing side region as the third port (192), and in particular **characterized by** a first inflow region (198) for air to the first port (188), which first inflow region is formed between the second port (190) and the first port (188), a second inflow region (200) which is formed between the third port (192) and the first port (188), a third inflow region (202) which is formed between the fourth port (194) and the first port (188), and a fourth inflow region (204) which is formed between the fifth port (196) and the first port (188), wherein in particular, the first inflow region (198) and the third inflow region (202) are mirror-symmetrical with respect to one another, and in particular, the second inflow region (200) and the fourth inflow region (204) are mirror-symmetrical with respect to one another.

**9.** The suction unit as claimed in one of the preceding claims, **characterized in that** at least one perforated-plate resonator (84; 148; 206) is acoustically associated with the cleaning device (33), wherein the at least one perforated-plate resonator (84; 148; 206) has a chamber (85) with a chamber space (88) and with a chamber wall (86) and has at least one perforated plate (90) which covers the chamber space (88), and in particular **in that** the at least one perforated-plate resonator (84; 148; 206) is, with respect to geometric dimensions and arrangement and form of openings (108) in the at least one perforated plate (90), dimensioned with respect to a noise source (33) such that a noise reduction at the maximum level of at least 2.5 dB is realized by means of the at least one perforated-plate resonator, and in particular in that the at least one perforated-plate resonator (84; 148; 206) is arranged with the at least one perforated plate (90) opposite the cleaning device (33) and in particular opposite the first port (134; 188), and in particular **in that** the at least one perforated plate (90) is arranged on the chamber wall (86), and in particular, a wall (106) of the chamber wall (86) is supported on the perforated plate (90).

**10.** The suction unit as claimed in claim 9, **characterized in that** the at least one perforated plate (90) of the at least one perforated-plate resonator (84; 148; 206) has a first side (94), which faces toward the chamber space (88), and a second side (96), which is situated opposite the first side (94), wherein a multiplicity of openings (108) is provided in the at least one perforated plate (90), which openings extend continuously between the first side (94) and the second side (96), and in particular **in that** the first side (94) and/or the second side (96) are of planar form, and in particular **in that** the first side (94) and the second side (96) are parallel to one another, and in particular **in that** the openings (108), on the first side (94), open into the chamber space (88) and, on the second side (96), face toward the first port, and in particular **in that** the openings (108), on the second side (96), open into the at least one guide duct (120; 180) and in particular into a second region (126; 184) of the at least one guide duct (120; 180).

**11.** The suction unit as claimed in claim 9 or 10, **characterized in that** the chamber wall (86) has a top wall (92), which is situated opposite the at least one perforated plate (90), and a wall (106) which is situated between the top wall (92) and the at least one perforated plate (90), and in particular **in that** the at least one perforated plate (90) and the top wall (92) are oriented parallel, and in particular **in that** the chamber space (88) has a (hollow) cuboidal shape.

12. The suction unit as claimed in one of claims 9 to 11, **characterized in that** the at least one perforated plate (150) is of non-planar form, and in particular has a first region (182), second region (184) and third region (186), wherein the first region (182) and the third region (186) are arranged oppositely on the second region (184) and lie at an angle with respect to the second region (184).

13. The suction unit as claimed in one of claims 9 to 12, **characterized in that** the chamber wall (86) has a first transverse wall (98), a second transverse wall (100), a first longitudinal wall (102), a second longitudinal wall (104) and a top wall (92), wherein the first transverse wall (98) and the second transverse wall (100) are spaced apart and face one another, the first longitudinal wall (102) and the second longitudinal wall (104) are spaced apart from one another and face one another, the first transverse wall (98) and the first longitudinal wall (102) are oriented transversely with respect to one another, and the top wall (92) is oriented transversely with respect to the first transverse wall (98), the second transverse wall (100), the first longitudinal wall (102) and the second longitudinal wall (104), and in particular **in that** the first transverse wall (98) and the second transverse wall (100) are oriented parallel, and/or the first longitudinal wall (102) and the second longitudinal wall (104) are oriented parallel.

14. The suction unit as claimed in one of claims 9 to 13, **characterized in that** the chamber wall (86) is produced at least partially from an acoustically hard material, and in particular **in that** the at least one perforated-plate resonator (148; 206) and in particular the at least one perforated plate (150) forms a wall of the at least one guide duct (120; 180), and in particular **in that** the at least one perforated-plate resonator (148; 206) is arranged on, and in particular is fixed to, a housing cover (166).

15. A method for operating a suction unit, wherein the suction unit comprises a suction apparatus (26), a dirt collection container (12), a filter device (21), wherein the dirt collection container (12) is connected in terms of flow via the filter device (21) to the suction apparatus (26), and a cleaning device (33) for the filter device (21), which cleaning device comprises an external-air valve device (33), in which method exhaust air of the suction apparatus (26) is conducted in a defined manner via at least one guide duct (120; 180) to the cleaning device, wherein the exhaust air is discharged from the at least one guide duct (120; 180) via at least one port (138; 192, 196) into the surroundings (140), and wherein the at least one port (138; 192, 196) is also formed as an inlet port for air from the surroundings (140), such that air from the surroundings (140) is configured to be fed through the at least one guide duct (120; 180) to the cleaning device (33).

## Revendications

1. Appareil d'aspiration, comportant un groupe d'aspiration (26), un récipient collecteur de saletés (12), un système de filtre (21), dans lequel le récipient collecteur de saletés (12) est en liaison fluidique avec le groupe d'aspiration (26) par l'intermédiaire du système de filtre (21), et un dispositif de nettoyage (33) pour le système de filtre (21), lequel comporte un dispositif de soupape d'air extérieur (33), **caractérisé par** au moins un canal de guidage (120 ; 180) pour l'air, lequel présente un premier raccord (134 ; 188), qui est en liaison fluidique avec le dispositif de nettoyage pour la fourniture d'air extérieur provenant du au moins un canal de guidage (120 ; 180), un deuxième raccord (136 ; 190) pour l'injection d'air vicié du groupe d'aspiration (26) dans le au moins un canal de guidage (120 ; 180), et présente un troisième raccord (138 ; 192), lequel est en liaison fluidique avec l'environnement (140) du groupe d'aspiration, dans lequel l'air provenant de l'environnement (140) peut affluer dans le au moins un canal de guidage (120 ; 180) par l'intermédiaire du troisième raccord (138 ; 192) .

2. Appareil d'aspiration selon la revendication 1, **caractérisé en ce que** le troisième raccord (138 ; 192) est conçu de telle sorte que l'air évacué du groupe d'aspiration (26) peut sortir dans l'environnement (140) au niveau dudit raccord.

3. Appareil d'aspiration selon la revendication 1 ou 2, **caractérisé en ce que** le au moins un canal de guidage (120 ; 180) s'étend entre le deuxième raccord (136 ; 190) et le troisième raccord (138 ; 192).

4. Appareil d'aspiration selon l'une quelconque des revendications précédentes, **caractérisé en ce que** le premier raccord (134 ; 188) est positionné par rapport à un guidage d'écoulement et/ou de manière géométrique entre le deuxième raccord (136 ; 190) et le troisième raccord (138 ; 192) et en particulier au moins à peu près au centre entre le deuxième raccord (136 ; 190) et le troisième raccord (138 ; 192).

5. Appareil d'aspiration selon l'une quelconque des revendications précédentes, **caractérisé en ce que** le au moins un canal de guidage (120 ; 180) présente une première zone (122 ; 182) pourvue d'un premier axe d'étendue (124), sur laquelle se situe le deuxième raccord (136 ; 190), une deuxième zone (126 ; 184) pourvue d'un deuxième axe d'étendue (128), sur laquelle se situe le premier raccord (134 ; 188), et une troisième zone (130 ; 186) pourvue d'un troisième axe d'étendue (132), sur laquelle se situe le troisième raccord (138 ; 192), dans lequel le premier axe d'étendue (124) et/ou le troisième axe d'étendue (132) sont orientés transversalement au deuxième axe d'étendue (128) et en particulier le premier raccord (134 ; 188) et le deuxième raccord (136 ; 190) se situent à des niveaux différents et/ou le premier raccord (134 ; 188) et le troisième raccord (138 ; 192) se situent à des niveaux différents, et en particulier en ce que la première zone (122 ; 182) et/ou la troisième zone (130 ; 186) sont agencées latéralement à côté du dispositif de nettoyage (33) ou du système de filtre (21).

6.  Appareil d'aspiration selon l'une quelconque des revendications précédentes, **caractérisé en ce que** le au moins un canal de guidage (120 ; 180) est agencé ou formé au moins en partie sur une zone de logement, laquelle recouvre le récipient collecteur de saletés (12) et/ou le système de filtre (21) et/ou le dispositif de nettoyage (33).

7.  Appareil d'aspiration selon l'une quelconque des revendications précédentes, **caractérisé en ce que** le au moins un canal de guidage (120) et le deuxième raccord (136) sont conçus de sorte que l'air vicié du groupe d'aspiration (26) pénètre entièrement dans le au moins un canal de guidage (120) et en particulier **en ce que** le au moins un canal de guidage (120) et le troisième raccord (138) sont conçus de sorte que l'air vicié du groupe d'aspiration (26), en dehors d'un processus de nettoyage du système de filtre (21), ne peut sortir dans l'environnement (140) qu'au niveau du troisième raccord (138), et en particulier **caractérisé par** une première zone d'admission (168) pour l'air menant au premier raccord (134), laquelle est formée entre le deuxième raccord (136) et le premier raccord (134), et une deuxième zone d'admission (170), laquelle est formée entre le troisième raccord (138) et le premier raccord (134).

8.  Appareil d'aspiration selon l'une quelconque des revendications 1 à 6, **caractérisé en ce qu'**un quatrième raccord (194) pour l'air vicié du groupe d'aspiration (26) est agencé sur le au moins un canal de guidage (180), et en particulier **en ce qu'**un cinquième raccord (196) au niveau de l'environnement (140) est agencé sur le au moins un canal de guidage (180), et en particulier **en ce que** le système de filtre (21) et/ou le dispositif de nettoyage (33) sont positionnés de manière géométrique entre le troisième raccord (192) et le cinquième raccord (196), et en particulier **en ce que** le troisième raccord (192) et le cinquième raccord (196) sont positionnés sur des faces opposées du logement, et en particulier **en ce que** le système de filtre (21) et/ou le dispositif de nettoyage (33) sont positionnés de manière géométrique entre le deuxième raccord (190) et le quatrième raccord (194), et en particulier **en ce que** le au moins un canal de guidage (180) est réalisé à symétrie spéculaire par rapport au troisième raccord (192) et au cinquième raccord (196) et/ou au deuxième raccord (190) et au quatrième raccord (194), dans lequel en particulier le premier raccord (188) se situe sur un plan de symétrie, et en particulier **caractérisé par** un guidage d'écoulement à symétrie spéculaire pour le guidage de l'air en direction du premier raccord (188), et en particulier en ce que le cinquième raccord (196) se situe sur une même zone latérale de logement que le deuxième raccord (190) et le quatrième raccord (194) se situe sur une même zone latérale de logement que le troisième raccord (192), et en particulier **caractérisé par** une première zone d'admission (198) pour l'air menant au premier raccord (188), laquelle est formée entre le deuxième raccord (190) et le premier raccord (188), une deuxième zone d'admission (200), laquelle est formée entre le troisième raccord (192) et le premier raccord (188), une troisième zone d'admission (202), laquelle est formée entre le quatrième raccord (194) et le premier raccord (188), et une quatrième zone d'admission (204), laquelle est formée entre le cinquième raccord (196) et le premier raccord (188), dans lequel en particulier la première zone d'admission (198) et la troisième zone d'admission (202) sont à symétrie spéculaire l'une par rapport à l'autre et en particulier la deuxième zone d'admission (200) et la quatrième zone d'admission (204) sont à symétrie spéculaire l'une par rapport à l'autre.

9.  Appareil d'aspiration selon l'une quelconque des revendications précédentes, **caractérisé en ce qu'**au moins un résonateur à plaque perforée (84 ; 148 ; 206) est associé au dispositif de nettoyage (33) de manière à absorber les sons, dans lequel le au moins un résonateur à plaque perforée (84 ; 148 ; 206) présente une chambre (85) pourvue d'un espace de chambre (88) et d'une paroi de chambre (86) et au moins une plaque perforée (90), laquelle recouvre l'espace de chambre (88), et en particulier **en ce que** le au moins un résonateur à plaque perforée (84 ; 148 ; 206), en ce qui concerne les dimensions géométriques et l'agencement et la réalisation des ouvertures (108) dans la au moins une plaque perforée (90), est dimensionné par rapport à une source de bruits (33) de telle sorte qu'une réduction du bruit au niveau maximal d'au moins 2,5 dB (150) est effectuée par le au moins un résonateur à plaque perforée, et en particulier **en ce que** le au moins un résonateur à plaque perforée (84 ; 148 ; 206) pourvu de la au moins une plaque perforée (90) est agencé à l'opposé du dispositif de nettoyage (33) et en particulier du premier raccord (134 ; 188), et en particulier **en ce que** la au moins une plaque perforée (90) est agencée sur la paroi de chambre (86) et en particulier une paroi (106) de la paroi de chambre (86) s'appuie sur la plaque perforée (90) .

10. Appareil d'aspiration selon la revendication 9, **caractérisé en ce que** la au moins une plaque perforée (90) du au moins un résonateur à plaque perforée (84 ; 148 ; 206) présente une première face (94), laquelle est tournée vers l'espace de chambre (88), et une deuxième face (96), laquelle est opposée à la première face (94), dans lequel une pluralité d'ouvertures (108) sont ménagées dans la au moins une plaque perforée (90), lesquelles sont continues entre la première face (94) et la deuxième face (96), et en particulier **en ce que** la première face (94) et/ou la deuxième face (96) sont plates, et en particulier **en ce que** la première face (94) et la deuxième face (96) sont parallèles l'une à l'autre, et en particulier **en ce que** les ouvertures (108), au niveau de la première face (94), débouchent dans l'espace de chambre (88) et, au niveau de la deuxième face (96), sont tournées vers le premier raccord, et en particulier **en ce que** les ouvertures (108) débouchent au niveau de la deuxième face (96) dans le au moins un canal de guidage (120 ; 180) et en particulier débouchent dans une deuxième zone (126 ; 184) du au moins un canal de guidage (120 ; 180) .

11. Appareil d'aspiration selon la revendication 9 ou 10, **caractérisé en ce que** la paroi de chambre (86) présente une paroi de couvercle (92), laquelle est opposée à la au moins une plaque perforée (90), et une paroi (106), laquelle se situe entre la paroi de couvercle (92) et la au moins une plaque perforée (90), et en particulier **en ce que** la au moins une plaque perforée (90) et la paroi de couvercle (92) sont orientées parallèlement et en particulier **en ce que** l'espace de chambre (88) présente une forme parallélépipédique creuse.

12. Appareil d'aspiration selon l'une quelconque des revendications 9 à 11, **caractérisé en ce que** la au moins une plaque perforée (150) n'est pas plate et présente en particulier une première zone (182), une deuxième zone (184) et une troisième zone (186), dans lequel la première zone (182) et la troisième zone (186) sont agencées à l'opposé sur la deuxième zone (184) et se situent de manière angulaire par rapport à la deuxième zone (184).

13. Appareil d'aspiration selon l'une quelconque des revendications 9 à 12, **caractérisé en ce que** la paroi de chambre (86) présente une première paroi transversale (98), une deuxième paroi transversale (100), une première paroi longitudinale (102), une deuxième paroi longitudinale (104) et une paroi de couvercle (92), dans lequel la première paroi transversale (98) et la deuxième paroi transversale (100) sont espacées et dirigées l'une vers l'autre, la première paroi longitudinale (102) et la deuxième paroi longitudinale (104) sont espacées l'une de l'autre et dirigées l'une vers l'autre, la première paroi transversale (98) et la première paroi longitudinale (102) sont orientées transversalement l'une à l'autre, et la paroi de couvercle (92) est orientée transversalement à la première paroi transversale (98), à la deuxième paroi transversale (100), à la première paroi longitudinale (102) et à la deuxième paroi longitudinale (104), et en particulier **en ce que** la première paroi transversale (98) et la deuxième paroi transversale (100) sont orientées parallèlement et/ou la première paroi longitudinale (102) et la deuxième paroi longitudinale (104) sont orientées parallèlement.

14. Appareil d'aspiration selon l'une quelconque des revendications 9 à 13, **caractérisé en ce que** la paroi de chambre (86) est fabriquée au moins en partie à partir d'un matériau réverbérant, et en particulier en ce que le au moins un résonateur à plaque perforée (148 ; 206) et en particulier la au moins une plaque perforée (150) forme une paroi du au moins un canal de guidage (120 ; 180), et en particulier **en ce que** le au moins un résonateur à plaque perforée (148 ; 206) est agencé sur un couvercle de logement (166) et en particulier fixé à celui-ci.

15. Procédé pour faire fonctionner un appareil d'aspiration, dans lequel l'appareil d'aspiration comprend un groupe d'aspiration (26), un récipient collecteur de saletés (12), un système de filtre (21), dans lequel le récipient collecteur de saletés (12) est en liaison fluidique avec le groupe d'aspiration (26) par l'intermédiaire du système de filtre (21), et un dispositif de nettoyage (33) pour le système de filtre (21), lequel comprend un dispositif de soupape d'air extérieur (33), selon lequel l'air vicié du groupe d'aspiration (26) est amené de manière définie au dispositif de nettoyage par l'intermédiaire d'au moins un canal de guidage (120 ; 180), dans lequel l'air vicié est rejeté du au moins un canal de guidage (120 ; 180) dans l'environnement (140) par l'intermédiaire d'au moins un raccord (138 ; 192, 196), et dans lequel le au moins un raccord (138 ; 192, 196) est également réalisé sous la forme de raccord d'entrée pour l'air provenant de l'environnement (140), de sorte que l'air provenant de l'environnement (140) peut être amené au dispositif de nettoyage (33) par le biais du au moins un canal de guidage (120 ; 180).

# FIG.1

# FIG.2

**FIG.3**

EP 3 244 785 B1

**FIG.4**

EP 3 244 785 B1

FIG.5

EP 3 244 785 B1

FIG.6

EP 3 244 785 B1

**FIG.7**

FIG.8

EP 3 244 785 B1

# FIG.9

EP 3 244 785 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012107103 A1